(19) **Europäisches Patentamt / European Patent Office / Office européen des brevets**

(11) **EP 4 549 058 A1**

(12) # EUROPEAN PATENT APPLICATION

(43) Date of publication:
07.05.2025 Bulletin 2025/19

(21) Application number: 24210456.0

(22) Date of filing: 04.11.2024

(51) International Patent Classification (IPC):
*B22F 10/80* (2021.01)  *B22F 10/85* (2021.01)
*B22F 12/90* (2021.01)  *B29C 64/386* (2017.01)
*B33Y 50/00* (2015.01)  *B33Y 50/02* (2015.01)
*B33Y 10/00* (2015.01)  *B33Y 30/00* (2015.01)
*G05B 19/18* (2006.01)  *G06N 3/02* (2006.01)

(52) Cooperative Patent Classification (CPC):
**B33Y 50/02; B22F 10/80; B22F 10/85; B22F 12/90; B29C 64/386; B33Y 10/00; B33Y 30/00; B33Y 50/00; G05B 19/4184; G05B 19/41875;** B22F 10/28; G05B 2219/32182; G06N 3/02; G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 06.11.2023 IN 202311075630
29.10.2024 US 202418930571

(71) Applicant: **General Electric Company**
**Cincinnati, Ohio 45215 (US)**

(72) Inventors:
• **S, Saravana Kumar**
**560066 Bengaluru (IN)**
• **Arumugam, Sharan**
**560066 Bengaluru (IN)**

• **Navalgund, Megha**
**560066 Bengaluru (IN)**
• **Bruns, Kirk Lars**
**Schenectady, 12345 (US)**
• **Ortner, Jonathan William**
**West Chester, 45069 (US)**
• **Rachakonda, Venkata Dharma Surya Narayana Sastry**
**560066 Bengaluru (IN)**
• **Shetty, Omkar**
**560066 Bengaluru (IN)**
• **Choudhary, Pooja**
**560066 Bengaluru (IN)**

(74) Representative: **Hafner & Kohl PartmbB**
**Schleiermacherstraße 25**
**90491 Nürnberg (DE)**

(54) **MULTI-MODALITY BUILD-TO-BUILD AND FLEET-LEVEL VARIABILITY ANALYTICS AND ADJUSTMENT OF ADDITIVE MACHINE, PROCESS HEALTH, AND BUILD QUALITY**

(57) Systems, apparatus, computer-readable medium, and associated methods to monitor, analyze, and adjust at least one of a build and/or an additive manufacturing machine configuration are disclosed.

An example apparatus includes memory circuitry (304, 404), instructions, and processor circuitry (1800) to execute the instructions to implement at least a feature extractor (710), a variability analyzer (620, 720), and an output generator (730). The feature extractor (710) is to: i) group data for a plurality of builds associated with one or more additive manufacturing machines (100); and ii) extract features from the grouped data. The variability analyzer (620, 720) is to: i) process the grouped data with respect to the features to determine a measure of variability for each feature; and ii) compare the measure of variability for each feature to a respective allowable limit associated with the respective feature. The output generator (730) is to provide actionable output to adjust at least a first additive manufacturing machine (100).

EP 4 549 058 A1

FIG. 1

**Description**

**CROSS-REFERENCE TO RELATED APPLICATION**

The present application claims priority to Indian Patent Application Number 202311075630, filed on November 6, 2023. Indian Patent Application Number 202311075630 is incorporated by reference in its entirety herein for all purposes.

**FIELD**

The present disclosure relates to systems, and methods for monitoring an additive manufacturing device, and more specifically, for monitoring, analyzing, and adjusting build-to-build and fleet-level additive manufacturing machines and associated processes.

**BACKGROUND**

In additive manufacturing processes such as melting of a powder layer to create an article, there exist some challenges to diagnose aborted or failed builds and/or identify performance issues of an additive manufacturing device. Specifically, an expert has to manually diagnose a build or the device, which requires a significant amount of time and human labor. In addition, finding a root cause of a failure of the additive manufacturing device is a difficult and time-consuming process, which is more or less impossible during a build. Even between builds, reliability and repeatability is a customer expectation. Failure to meet this expectation rendered individual additive manufacturing machines, as well as a fleet of such additive manufacturing machines, ineffective at best and useless at worst. Thus, there is an unmet need for improved reliability of machines and builds and repeatability of builds in a fleet of additive manufacturing machines.

**BRIEF DESCRIPTION OF THE DRAWINGS**

FIG. 1 depicts an additive manufacturing system of the present disclosure, according to one or more examples shown and described herewith.

FIG. 2 is a block diagram of an example system according to one or more examples shown and described herein.

FIG. 3 depicts various internal components of a control component of an additive manufacturing system, according to one or more examples shown and described herein.

FIG. 4 depicts the various internal components of a user computing device communicating with an additive manufacturing system, according to one or more examples shown and described herein.

FIG. 5 illustrates an example infrastructure or framework to monitor and adjust additive manufacturing based on machine health monitoring and analysis.

FIG. 6 illustrates an example build-to-build variability analyzer circuit which can be implemented with example infrastructure of FIG. 5.

FIG. 7 provides a more detailed view of an example configuration of the example build-to-build variability analyzer circuitry of the example of FIG. 6.

FIGS. 8-10 are flow diagrams representative of example hardware logic, machine readable instructions, hardware implemented state machines, and/or any combination thereof for implementing the example build-to-build variability analyzer circuit of FIGS. 6-7.

FIGS. 11-17 illustrate example interactive interfaces and associated controls that can form part of the user interface of FIGS. 6-7.

FIGS. 18-20 are block diagrams of an example processor platform and associated circuitry structured to execute the instructions of FIGS. 8-10 to implement the example deployment server of FIGS. 6-7.

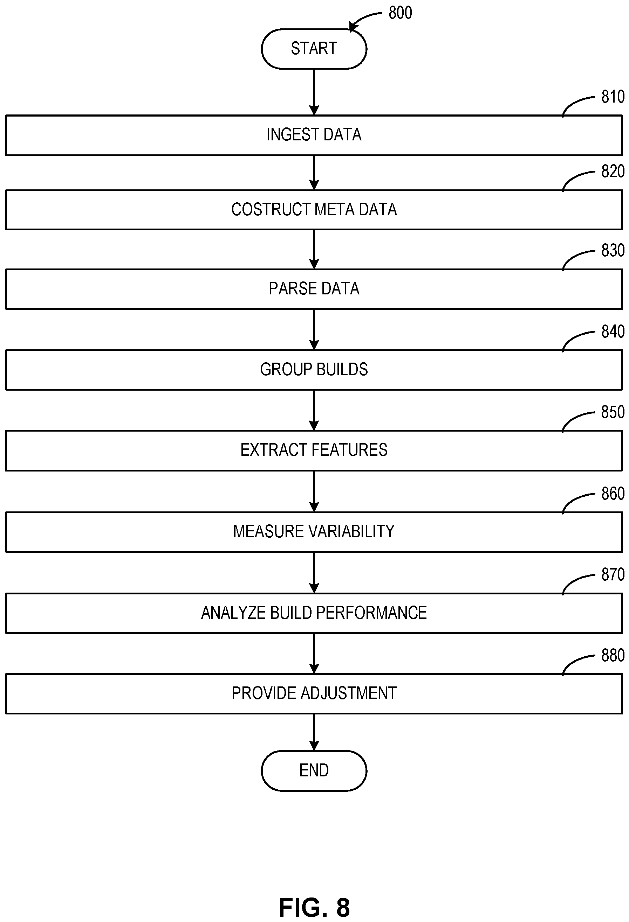

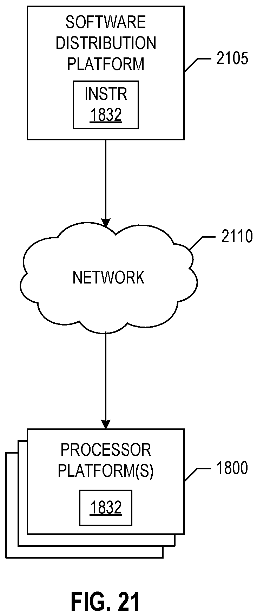

FIG. 21 is a block diagram of an example software/firmware/instructions distribution platform (e.g., one or more servers) to distribute software, instructions, and/or firmware (e.g., corresponding to the example machine readable instructions of FIGS.8-10) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. Instead, the thickness of the layers or regions may be enlarged in the drawings. In general, the same reference numbers will be used throughout the drawing(s) and accompanying written description to refer to the same or like parts. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" with another part means that there is no intermediate part between the two parts.

Descriptors "first," "second," "third," etc. are used herein when identifying multiple elements or components which may be referred to separately. Unless otherwise specified or understood based on their context of use, such descriptors are not intended to impute any meaning of priority, physical order, or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

## DETAILED DESCRIPTION

Additive manufacturing is a process by which a three-dimensional structure is built, usually in a series of layers, based on a digital model of the structure. While some examples of additive manufacturing technology rely on sintering or melting/fusing using an energy source to form the structure, rather than "printing", in which material is deposited at select locations, the term "print" is often used to describe the additive manufacturing process (e.g., three-dimensional (3D) printing, 3D rapid prototyping, etc.). Examples of additive manufacturing techniques include Fused Deposition Modeling, Electron Beam Melting, Laminated Object Manufacturing, Selective Laser Sintering (including Direct Metal Laser Sintering, also referred to as Direct Metal Laser Melting or Selective Laser Melting), and Stereolithography, among others. Although 3D printing technology is continually developing, the process to build a structure layer-by-layer is complex, inefficient, and prone to failure. An error in the 3D process can lead to weakness or failure in the manufactured part and, therefore, waste, risk, and other unreliability.

The phrase "additive manufacturing apparatus" is used interchangeably herein with the phrase "printing apparatus" and term "printer", and the term "print" is used interchangeably herein with the word "build", referring to an action to build a structure using an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Additive manufacturing systems may use an electron-beam or a laser beam to manufacture builds, for example. Additive manufacturing systems may include multiple electron-beam guns or laser designs. Examples of additive manufacturing or printing techniques include Fused Deposition Modeling, Electron Beam Melting, Laminated Object Manufacturing, Selective Laser Sintering (including Direct Metal Laser Sintering also referred to as Direct Metal Laser Melting or Selective Laser Melting), and Stereolithography among others.

For example, selective laser melting (SLM), also known as direct metal laser melting (DMI,M), Direct Metal Laser Sintering (DMI,S), or laser powder bed fusion (LPBF), is a rapid prototyping, 3D printing, or additive manufacturing (AM) technique designed to use a high power-density laser to melt and fuse metallic powders together. The SLM process can fully melt the metal material into a solid three-dimensional part, for example.

SLM is a part of additive manufacturing in which a high power density laser is used to melt and fuse metallic powders together. With SLM, thin layers of atomized fine metal powder are evenly distributed onto a substrate plate (e.g., a metal, etc.) using a coating mechanism. The substrate plate is fastened to an indexing table that moves in the vertical (Z) axis. This takes place inside a chamber containing a tightly controlled atmosphere of inert gas, either argon or nitrogen at oxygen levels below 500 parts per million, for example. Once each layer has been distributed, each two-dimensional (2D) slice of the part geometry is fused by selectively melting the powder. Melting of the powder is accomplished with a high-power laser beam, such as an ytterbium (Yb) fiber laser with hundreds of watts, etc. The laser beam is directed in the X and Y directions with a plurality (e.g., two, four, etc.) of high frequency scanning mirrors. The laser energy is intense enough to permit full melting (welding) of the particles to form solid metal. The process is repeated layer after layer until the part is complete.

Direct Metal Laser Melting (DMI,M) or Direct Metal Laser Sintering (DMI,S) are particular type(s) of SLM that use a variety of alloys and allows prototypes to be functional hardware made out of the same material as production components. Since the components are built layer by layer, it is possible to design organic geometries, internal features, and challenging passages that could not be cast or otherwise machined. For example, DMI,S produces strong, durable metal parts that work well as functional prototypes and/or end-use production parts, for example.

Objects are built directly from a file generated from CAD (computer-aided design) data. The DMI,S process begins by slicing 3D CAD file data into layers (e.g., from 20 to 100 micrometers thick, 30-120 $\mu$m thick, 50-150 $\mu$m thick, etc.), creating a two-dimensional (2D) image of each layer. For example, a format of the 3D CAD file is a .stl file used on most layer-based 3D printing or stereolithography technologies. This file is then loaded into a file preparation software package that assigns parameters, values and physical supports that allow the file to be interpreted and built by different types of additive manufacturing machines, for example.

In DMLS/DMLM, use of a laser to selectively melt thin layers of tiny particles yields objects exhibiting fine, dense, and homogeneous characteristics. The DMLS machine uses a high-powered 200 watt Yb-fiber optic laser, for example. The machine includes a build chamber area including a material dispensing platform and a build platform along with a re-coater blade used to move new powder over the build platform. The technology fuses metal powder into a solid part by melting it locally using the focused laser beam. A melt pool is formed when the powder melts from exposure to the laser beam radiation. Parts are built up additively layer by layer (e.g., using layers 10 micrometers thick, 20 $\mu$m thick, 30 $\mu$m thick, 50 $\mu$m thick, etc.).

The DMI,S process begins with a roller spreading a thin layer of metal powder on the print bed. Next, a laser is directed based on the CAD data to create a cross-section of the object by completely melting metal particles. The print bed is then lowered so the process can be repeated to create the next object layer. After all the layers are printed, the excess unmelted powder is brushed, blown, or blasted away. The object typically requires little, if any, finishing.

The machine can include and/or operate with monitoring and control systems and methods, such as iterative learning control, continuous autocalibration, and real-time melt pool monitoring, etc., to introduce a step change in the build process performance and stability, for example. Certain examples enable melt pool monitoring, iterative learning control, continuous auto-calibration, real-time melt pool control, filter monitoring, pump monitoring, jet application monitoring, cathode and beam monitoring, etc.

Other additive manufacturing methods, such as Electron Beam Melting (EBM), can be used for crack-prone metal alloys, such as titanium, etc. With EBM, high-performance electron beam sources and in-situ process monitoring using "self-generated" x-ray imaging and backscatter electron technologies can be used for improved quality control. A binder jet allows fast printing at lower cost with novel support structure designs and clean-burning binders to solve two key technology challenges of sintering distortion and material properties to enable additive manufacturing for automotive, other transportation solutions, powder generation, etc. EBM utilizes a raw material in the form of a metal powder or a metal wire, which is placed under a vacuum (e.g., within a vacuum sealed build chamber). Generally speaking, the raw material is fused together from heating via an electron beam.

Systems that utilize EBM generally obtain data from a 3D computer-aided design (CAD) model and use the data to place successive layers of the raw material using an apparatus to spread the raw material, such as a powder distributor. The successive layers are melted together utilizing a computer-controlled electron beam. As noted above, the process takes place under vacuum within a vacuum sealed build chamber, which makes the process suited to manufacture parts using reactive materials having a high affinity for oxygen (e.g., titanium). In certain examples, the process operates at higher temperatures (up to about 1,200 °C) relative to other additive manufacturing processes, which can lead to differences in phase formation though solidification and solid-state phase transformation.

Examples described herein are applicable to other additive manufacturing modalities employing other types of additive manufacturing devices beyond those disclosed herein. For example, directed energy deposition (DED), direct ceramic, BinderJet, stereolithography, photopolymerization, etc., can benefit from the monitoring, analysis, and correction described herein.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

As used herein, the terms "system," "unit," "module," "engine," "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hardwired logic of the device. Various modules, units, engines, and/or systems shown in the attached figures may represent the hardware that operates based on software or hardwired instructions, the software that directs hardware to perform the operations, or a combination thereof.

The present disclosure generally relates to devices, systems, and methods for monitoring, determining, and adjusting health of an additive manufacturing device (also referred to as an additive manufacturing machine), a fleet of additive manufacturing devices, and/or an associated process, build, etc. A build involves formation of a part (e.g., a blade, a rotor, a stator, a trunnion, a case, a shroud, other industrial component, etc.) by an additive manufacturing machine, for example. Example systems and methods obtain data for a build, process, machine configuration, etc., and ingest, fuse, analyze, and aggregate the data for state determination and analysis. Such methods may include consideration and analysis of actual sensor data from machine or process, as well as metadata derived from statistical process control and/or other quality scoring, for example. Certain examples determine build, process, and/or machine health, on a layerwise and/or overall basis without requiring manual analysis. In addition, the systems and methods according to the present disclosure enhance the accuracy of diagnosing builds and/or additive manufacturing devices to provide actionable output (e.g., to correct a build, adjust an additive manufacturing device and/or associated process, provide an inspection advisory such as scrapping parts from a build with high variation altogether or to order the parts with high chances of passing through post process inspection, etc.).

Conducting a multi-build analysis is important to help understand whether an additive manufacturing machine(s) is performing efficiently and repeatably over time. Traditionally, such multi-build analysis would involve accessing data for individual builds, extracting the data, converting the data to meaningful information (which requires high domain and machine expertise), and then manually performing variability analysis. The steps involved in such analysis are time consuming and require high expertise. Additionally, results such as a sudden and/or otherwise unplanned abort of a build, down-time of the additive manufacturing machine, etc., significantly impact availability, predictability, and productivity of the additive manufacturing machine.

Reliability and repeatability of additive manufacturing machines is an important expectation from a user. To address this need, unmet by current systems and methods, examples of the present disclosure provide a build-to-build variability tool, which analyzes a group of builds and provides insights related to sources and causes of variation and enables correction action to be taken to improve the repeatability and reliability of their fleet of machines. In certain examples, a build can be scrapped. However, in other builds, systems and methods can evaluate the build and provide an indication of confidence (e.g., high, medium, or low confidence) that the resulting part will pass post-processing inspection.

In certain examples, a build variability analysis is performed with respect to setting(s) of an additive manufacturing machine and/or particular build, process duration(s), sensor response(s), sub-system and process health, etc. A complete "build data package" includes a part design specification (e.g., a model or schematic of the part), material parameters, machine settings and configurations, sensor and programmable logic controller (PLC) data, errors/warnings, meltpool process data, recoat sensor/camera data, live video images, build odometer/runtime counter data, etc. The build data package is analyzed. Depending on the modality, one or more data sources providing the build data package are fed to one or more corresponding feature extraction modules, which compute process duration(s), lag(s), process and sub-system health metric(s) (e.g., statistics and physics-/domain-based computations, etc.). Extracted features are provided to a variability analytics module that computes an extent of feature variation across a defined group of builds. A statistical significance test is also performed that further determines whether the computed feature variation is significant or not. For example, a significance of variability in a set of features can be determined with respect to a historic performance of one or more additive manufacturing machines as "learned" by the variability analytics module (e.g., learned through training of an artificial intelligence model based on a volume of build and other additive manufacturing machine data). For example, data can include sub-process duration(s), modeled component condition, anomalous powder bed area discerned from images, consistent meltpool intensity, temperature of non-binded powder surface read from infrared thermal imaging cameras (e.g., binderjet), etc.

In certain examples, variability analysis can be performed with respect to a "golden" or reference build. A reference build can be formed of a single build, which can be used to track deviation of a future build from the reference build. Alternatively or additionally, the reference build can be an envelope or range in which future builds are expected to fall. Reference build(s) are determined by analysis of historic 'relevant' builds (e.g., builds of the same part on the same additive manufacturing machine or same type of additive manufacturing machine) with minimum errors, lags, health and process anomalies, as well as conformance to desired settings for the build, additive manufacturing machine, etc. 'Relevant' here refers to a same part/build parameter set, material, etc., which is automatically identified based on smart-grouping of builds, additive manufacturing machines, etc. As such, a reference build exemplifying a successful build of a part on an additive manufacturing machine can then be used for comparison of other build(s) of such a part on that same and/or another additive manufacturing machine of the same type. In some examples, a golden or reference build can be used on an analytics computer for real-time, layerwise comparison to an ongoing build. As such, overall build quality, health, and success can be predicted, for example.

Such variability analysis with respect to a determined reference build enables modality-agnostic, fleet-level variability analysis and drives adjustment to additive manufacturing machines, build/print parameters, other settings/configuration, etc., to correct an identified issue related to the variability. A contributing variation can be evaluated and adjusted based on one or more settings, machine health features, build time features, parameter design, material, environment, etc.

Certain examples provide a flexible architecture for feature extraction and analysis including additional parameters/features from maintenance data, powder characteristics, post-processing based results, etc. Additionally, correlation methods are built-in to visualize a correlation of varying parameters (e.g., output from a feature extraction module) with respect to standard features/parameters. As such, multiple builds can be monitored, analyzed, and/or adjusted on the same additive manufacturing machine over time. Builds of the same part on the same additive manufacturing machine and/or across different additive manufacturing machines can be monitored, analyzed, and/or adjusted, for example. Builds of different parts on the same additive manufacturing machine and/or across different additive manufacturing machines can be monitored, analyzed, and/or adjusted, for example. Analysis and insights are automatically generated based on the situation (e.g., same part, multiple parts, same machine, multiple machines, etc.) to identify an issue or other anomaly and provide a remedy, for example.

Current solutions are manual and without promise of either identification of a cause of a problem or determination of its solution. Manual processing of data from multiple sources is infeasible and unworkable (and not scalable to a fleet). Extensive, specific knowledge is required for even a chance of success. Even though, diagnostics can take weeks with several people involved in the process. In the meantime, the affected additive manufacturing machine(s) are unavailable and associated build(s) are unusable.

Certain examples provide an end-to-end framework or architecture that focuses across multiple builds and multiple additive manufacturing machines, leveraging multiple sources of data (e.g., meltpool data, powder bed images, temperature measurements, etc.) to drive a multi-faceted identification of a problem, analysis of its cause, and determination of an adjustment or other solution. Data complexity is handled, analysis and interpretation are provided, and data and resulting parameter adjustments can be transferred, visualized, configured, etc. Certain examples further analyze using domain physics to proactively and/or reactively determine a problem and its cause (and potential solution). A plurality of available data sources are analyzed to address fleet-level concerns such as repeatability insights, overall equipment effectiveness (OEE) metrics (e.g., availability x performance x quality), maintenance advisory, inspection advisory, etc.

Such a framework or architecture provides a "one-stop" solution that reads data across multiple sources and analyzes the data based on domain physics as well as processing methods such as statistical methods, artificial intelligence (AI) methods, etc. Actionable results are generated from the analysis that identify a root cause of an issue, mitigating action(s), etc. The results can be presented in a single interactive dashboard, output to one or more associated controllers, etc. Alternatively or additionally, factory acceptance testing and/or system/installation acceptance testing can be facilitated to confirm conformance to expected norms as well as consistency or other lack of change between an additive manufacturing machine shipped from a factory, the additive manufacturing machine arrived at a customer site, the additive manufacturing machine installed at a customer site, etc.

Through the collection and processing of data, a multi-build additive analytics apparatus can determine which additive manufacturing machines are causing variability, when non-optimal behavior started at one or more machines, a cause of the non-optimal behavior, factors related to part quality, multi-build/fleet level variability analysis, etc. The apparatus generates a classification of 'statistical variability' as concerning or non-concerning, for example, based on machine and process know-how and historical additive machine performance for the same or similar customer/user. The apparatus determines health of an additive manufacturing machine, additive build process health and efficiency, part quality conformance, OEE, settings and calibration performance, auxiliary system performance (e.g., powder, post processing, inspection, etc.), etc.

In certain examples, analysis of builds of a same part and/or occurring on a same machine form a population or group for analysis by the analytics apparatus. Gathered build and/or machine data for the population is compared to a reference build and/or reference population. Such population-based analysis can drive automatic, customizable analysis and insights based on additive machine, built part, build process, modality, product line, etc. In certain examples, a relevant reference build can be automatically identified and/or constructed from verified successful builds meeting desired criteria.

In operation, data corresponding to a build (e.g., from multiple sources such as laser(s), camera(s), sensor(s), etc.) is transferred from the IPC to an external computing device, such as an analytics computing device (APC), server, cloud-based computing circuitry, etc., based on a configuration. The gathered data is then pre-processed (e.g., pre-processing for data clean-up and feature engineering, etc.), the pre-processed data is provided to a 'measure of variability' circuit to compute statistical variability of the data. Results of the statistical variability computation are provided to a 'behavior analyzer model' that classifies the statistical variability (e.g., as 'concerning', 'non-concerning', etc.). A 'behavior learner model' applies one or more machine learning models to 'learn' control limits and/or 'optimal' behavior based on an additive manufacturing machine's application and historical performance. An output of the behavior learner module is 'applied' by the 'behavior analyzer model'. Results are stored in a database, used to generate user interface (UI) visualization, used to modify machine and/or build behavior, etc.

Certain examples include one or more additional models to aid in processing, understanding, and responding to good builds, bad builds, other errors and/or inefficiencies, etc. For example, a predictive behavior analysis model detects trends based on 'data over time'. The predictive behavior analysis model flags concerning trends and computes time to next maintenance. A correlation model enables definition and/or selection of an outcome (Y) (e.g., part quality, filter health, etc.) and inputs {xs} (e.g., a mixture of analytics computed features and/or defined attributes such as powder characteristics, ambient temperature, etc.). Certain examples can be run during a build on an analytics processor to perform layerwise variability analysis against expected norms, perform overall quality scoring, predict overall trends, predict issues, predict exceeding of specified limits, and/or determine a probability of a successful quality build. A golden build model searches through defined and/or selected builds to recommend a 'golden' or reference build. The golden build model can provide a digitally generated reference build and/or an actual build that qualifies as 'golden' or reference, for example.

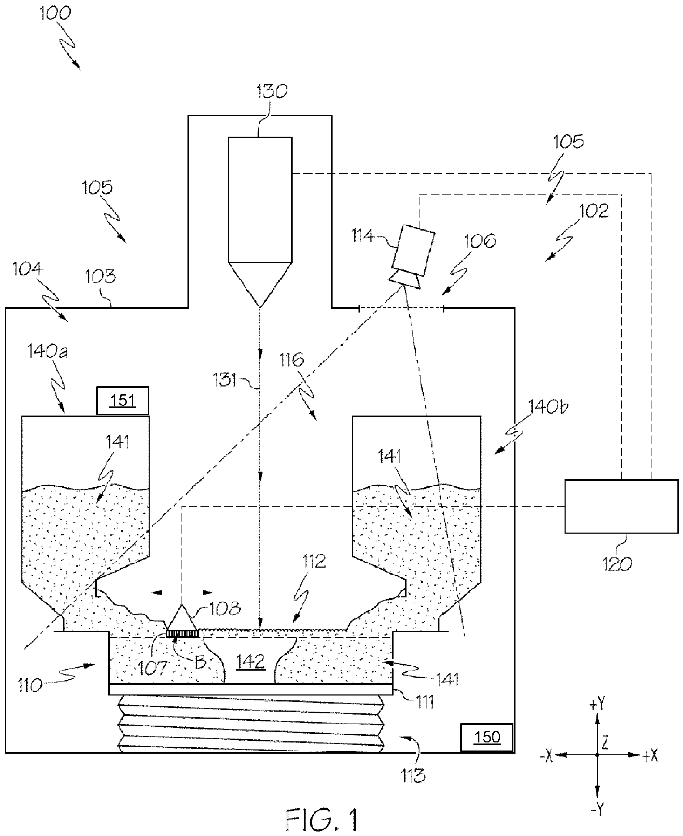

FIG. 1 depicts an additive manufacturing device of the present disclosure, according to one or more examples shown and described herewith. As shown in FIG. 1, an additive manufacturing system 100 (also referred to herein as an additive manufacturing device, an additive manufacturing machine, an additive machine, etc.) includes at least a build chamber 102, an imaging device 114, and a control component 120. The build chamber 102 defines an interior 104 that is separated from an exterior environment 105 via one or more chamber walls 103. In some examples, at least a portion of the one or more chamber walls 103 of the build chamber 102 may include a window 106 therein. The imaging device 114 is generally located adjacent to the build chamber 102 in the exterior environment 105 (i.e., not located within the interior 104 of the build chamber 102), and is arranged such that a field of view 116 of the imaging device 114 extends through the window 106 into the interior 104 of the chamber.

In some examples, the interior 104 of the build chamber 102 may be a vacuum sealed interior such that an article 142 formed within the build chamber 102 is formed under optimal conditions for EBM or DMI,M, as is generally understood. The build chamber 102 is capable of maintaining a vacuum environment via a vacuum system. Illustrative vacuum systems may include, but are not limited to, a turbo molecular pump, a scroll pump, an ion pump, and one or more valves, as are generally understood. In some examples, the vacuum system may be communicatively coupled to the control component 120 such that the control component 120 directs operation of the vacuum system to maintain the vacuum within the interior 104 of the build chamber 102. In some examples, the vacuum system may maintain a base pressure of about $1 \times 10^{-5}$ mbar or less throughout an entire build cycle. In further examples, the vacuum system may provide a partial pressure of He or other reactive or inert control gas to about $2 \times 10^{-3}$ mbar during a melting process.

In other examples, the build chamber 102 may be provided in an enclosable chamber provided with ambient air and atmosphere pressure. In yet other examples, the build chamber 102 may be provided in open air.

The build chamber 102 generally includes within the interior 104 a powder bed 110 supporting a powder layer 112 thereon, as well as a powder distributor 108. In some examples, the build chamber 102 may further include one or more raw material hoppers 140a, 140b that maintain raw material 141 therein. In some examples, the build chamber 102 may further include an emitter 130. The build chamber 102 may further include other components, particularly components that facilitate EBM or DMI,M, including components not specifically described herein.

The powder bed 110 is generally a platform or receptacle located within the interior 104 of the build chamber 102 that is arranged to receive the raw material 141 from the one or more raw material hoppers 140a, 140b. The powder bed 110 is not limited in size or configuration by the present disclosure, but may generally be shaped and sized to hold an amount of the raw material 141 from the raw material hoppers 140a, 140b in the form of the powder layer 112, one or more portions of article 142, and/or unfused raw material 141, as described in greater detail herein.

In some examples, the powder bed 110 may include a movable build platform 111 supported by a lifting component 113. The movable build platform 111 may generally be a surface within the powder bed 110 that is movable by the lifting component 113 in a system vertical direction (e.g., in the +y/-y directions of the coordinate axes of FIG. 1) to increase and/or decrease a total volume of the powder bed 110. For example, the movable build platform 111 within the powder bed 110 may be movable by the lifting component 113 in a downward direction (e.g., toward the -y direction of the coordinate axes of FIG. 1) so as to increase the volume of the powder bed 110. In addition, the movable build platform 111 may be movable by the lifting component 113 to add each successive powder layer 112 to the article 142 being formed, as described in greater detail herein.

The lifting component 113 is not limited by the present disclosure, and may generally be any device or system capable of being coupled to the movable build platform 111 and movable to raise or lower the movable build platform 111 in the system vertical direction (e.g., in the +y/y directions of the coordinate axes of FIG. 1). In some examples, the lifting component 113 may utilize a linear actuator type mechanism to effect movement of the movable build platform 111. Illustrative examples of devices or systems suitable for use as the lifting component 113 include, but are not limited to, a scissor lift, a mechanical linear actuator such as a screw based actuator, a wheel and axle actuator (e.g., a rack and pinion type actuator), a hydraulic actuator, a pneumatic actuator, a piezoelectric actuator, an electromechanical actuator, and/or the like. In some examples, the lifting component 113 may be located within the build chamber 102. In other examples, the lifting component 113 may be only partially located within the build chamber 102, particularly in examples in which it may be desirable to isolate portions of the lifting component 113 that are sensitive to the harsh conditions (high heat, excessive dust, etc.) within the interior 104 of the build chamber 102.

The powder distributor 108 is generally arranged and configured to lay down and/or spread a layer of the raw material 141 as the powder layer 112 in the powder bed 110 (e.g., on start plate or build platform 111 within the powder bed). That is, the powder distributor 108 is arranged such that movement of the powder distributor 108 is in a horizontal plane defined by the x-axis and the z-axis of the coordinate axes depicted in FIG. 1. For example, the powder distributor 108 may be an arm, rod, or the like that extends a distance in the z direction of the coordinate axes of FIG. 1 over or above the powder bed 110 (e.g., from a first end to a second end of the powder bed 110). In some examples, the length of the powder distributor 108 may be longer than a width of the build platform 111 such that the powder layer 112 can be distributed on each position of the build platform 111. In some examples, the powder distributor 108 may have a central axis in parallel with a top surface of the build platform 111 (e.g., generally parallel to the +x/-x axis of the coordinate axes of FIG. 1). One or more motors, actuators, and/or the like may be coupled to the powder distributor 108 to effect movement of the powder distributor 108. For example, a rack and pinion actuator may be coupled to the powder distributor 108 to cause the powder distributor 108 to move back and forth over the powder bed in the +x/-x directions of the coordinate axes of FIG. 1, as indicated by the double sided arrow depicted above the powder distributor 108 in FIG. 1. In some examples, movement of the powder distributor 108 may be continuous (e.g., moving without stopping, other than to change direction). In other examples, movement of the powder distributor 108 may be stepwise (e.g., moving in a series of intervals). In yet other examples, movement of the powder distributor 108 may be such that a plurality of interruptions occur between periods of movement.

As described in greater detail herein, the powder distributor may further include one or more teeth (e.g., rake fingers or the like) that extend from the powder distributor 108 into the raw material 141 from the raw material hoppers 140a, 140b to cause disruption of the raw material 141 when the powder distributor 108 moves (e.g., to distribute the raw material 141, to spread the powder layer 112, etc.).

In some examples, the powder distributor 108 includes a plurality of rake teeth 107 extending from a bottom surface B of the powder distributor 108 (e.g., extending generally towards the -y direction of the coordinate axes of FIG. 1). In some examples, the rake teeth 107 may extend in a direction that is substantially perpendicular to a plane of the build platform 111 (e.g., perpendicular to the plane formed by the x-axis and z-axis of the coordinate axes depicted in FIG. 1). In another example, the rake teeth 107 may be slanted with respect to the build platform 111. An angle a of the slanted rake teeth 107 with respect to a normal to the build platform may be any value, and, in some examples, is between about 0 and about 45°.

In some examples, each one of the plurality of rake teeth 107 may be a metal foil or a metal sheet. The total length of the plurality of rake teeth 107 may be longer than a width of the build platform 111 in order to make it possible to distribute powder on each position of the build platform 111. The rake teeth 107 may be shaped and sized to rake through the raw material 141 to distribute the powder layer 112 on the build platform 111. Some examples may not include rake teeth 107.

It should be understood that while the powder distributor 108 described herein generally extends a distance in the x direction of the coordinate axes depicted in FIG. 1 and moves in the +x/-x directions of the coordinate axes depicted in FIG. 1 to spread the powder layer 112 as described above, this is merely one illustrative example. Other configurations are also contemplated. For example, the powder distributor 108 may rotate about an axis to spread the powder layer 112, may articulate about one or more joints or the like to spread the powder layer 112, and/or the like without departing from the scope of the present disclosure.

In some examples, a cross section of the powder distributor 108 may be generally triangular, as depicted in FIG. 1. However, it should be understood that the cross section may be any shape, including but not limited to, circular, elliptical, quadratic, rectangular, polygonal or the like. A height of the powder distributor 108 may be set in order to give the powder distributor 108 a particular mechanical strength in the system vertical direction (e.g., along the +y/-y axis of the coordinate axes of FIG. 1). That is, in some examples, the powder distributor 108 may have a particular controllable flex in the system vertical direction. The height of the powder distributor may also be selected considering that the powder distributor 108 pushes an amount of the raw material 141. If the height of the powder distributor 108 is too small, the powder distributor 108 can only push forward a smaller amount relative to a higher power powder distributor 108. However, if the height of the powder distributor 108 is too high, the powder distributor 108 may complicate the powder catching from a scree of powder, (e.g., the higher the height of the powder distributor 108, the more force may be required in order to catch a predetermined amount of powder from the scree of powder by moving the powder distributor 108 into the scree of powder and letting a predetermined amount of powder fall over the top of the powder distributor 108 from a first side in the direction of travel into the scree of powder to a second side in the direction of the build platform 111). In still yet other examples, the height of the powder distributor 108 may be such that areas adjacent to both a leading edge and a trailing edge of the powder distributor 108 are within a field of view 116 of the imaging device 114, as described herein.

In some examples, the powder distributor 108 may be communicatively coupled to the control component 120, as depicted by the dashed line in FIG. 1 between the powder distributor 108 and the control component 120. As used herein, the term "communicatively coupled" generally refers to any link in a manner that facilitates communications. As such, "communicatively coupled" includes both wireless and wired communications, including those wireless and wired communications now known or later developed. As the powder distributor 108 is communicatively coupled to the control component 120, the control component 120 may transmit one or more signals, data, and/or the like to cause the powder distributor 108 to move, change direction, change speed, and/or the like. For example, a "reverse direction" signal transmitted by the control component 120 to the powder distributor 108 may cause the powder distributor 108 to reverse the direction in which it is moving (e.g., reverse movement in the +x direction to movement in the -x direction).

Each of the raw material hoppers 140a, 140b may generally be containers that hold an amount of the raw material 141 therein and contain an opening to dispense the raw material 141 therefrom. While FIG. 1 depicts two raw material hoppers 140a, 140b, the present disclosure is not limited to such. That is, any number of raw material hoppers may be utilized without departing from the scope of the present disclosure. Further, while FIG. 1 depicts the raw material hoppers 140a, 140b as being located within the interior 104 of the build chamber 102, the present disclosure is not limited to such. That is, the raw material hoppers 140a, 140b may be located outside or partially outside the build chamber 102 in various other examples. However, it should be understood that if a raw material hopper is located outside or partially outside the build chamber 102, one or more outlets of the raw material hoppers that supply the raw material 141 may be selectively sealed when not distributing the raw material 141 in order to maintain the vacuum within the build chamber 102.

The shape and size of the raw material hoppers 140a, 140b are not limited by the present disclosure. That is, the raw material hoppers 140a, 140b may generally have any shape and or size without departing from the scope of the present disclosure. In some examples, each of the raw material hoppers 140a, 140b may be shaped and or sized to conform to the dimensions of the build chamber 102 such that the raw material hoppers 140a, 140b can fit inside the build chamber. In some examples, the raw material hoppers 140a, 140b may be shaped and sized such that a collective volume of the raw material hoppers 140a, 140b is sufficient to hold an amount of raw material 141 that is necessary to fabricate the article 142, which includes a sufficient amount of material to form each successive powder layer 112 and additional material that makes up the unfused raw material 141.

The raw material hoppers 140a, 140b may generally have an outlet for ejecting the raw material 141 located within the raw material hoppers 140a, 140b such that the raw material 141 can be spread by the powder distributor 108, as described herein. In some examples, such as the example depicted in FIG. 1, the raw material 141 may freely flow out of the raw material hoppers 140a, 140b under the force of gravity, thereby forming piles or scree of raw material 141 for the powder distributor 108 to spread. In other examples, the outlets of the raw material hoppers 140a, 140b may be selectively closed via a selective closing mechanism so as to only distribute a portion of the raw material 141 located within the respective raw material hoppers 140a, 140b at a particular time. The selective closing mechanisms may be communicatively coupled to the control component 120 such that data and/or signals transmitted to/from the control component 120 can be used to selectively open and close the outlets of the raw material hoppers 140a, 140b.

The raw material 141 contained within the raw material hoppers 140a, 140b and used to form the article 142 is not limited by the present disclosure, and may generally be any raw material used for EBM or DMI,M now known or later developed. Illustrative examples of raw material 141 includes, but is not limited to, pure metals such as titanium, aluminum, tungsten, or the like; and metal alloys such as titanium alloys, aluminum alloys, stainless steel, cobalt-chrome alloys, cobalt-chrome-tungsten alloys, nickel alloys, and/or the like. Specific examples of raw material 141 include, but are not limited to, Ti6Al4V titanium alloy, Ti6Al4V ELI titanium alloy, Grade 2 titanium, and ASTM F75 cobalt-chrome (all available from Arcam AB, Mölndal, Sweden). Another specific example of raw material 141 is INCONEL® alloy 718 available from Special Metals Corporation (Huntington WV).

In certain examples, the raw material 141 is pre-alloyed, as opposed to a mixture. This may allow classification of EBM or DMI,M with selective laser melting (SLM), where other technologies like selective laser sintering (SLS) and direct metal laser sintering (DMI,S) require thermal treatment after fabrication. Compared to selective laser melting (SLM) and DMLS, EBM has a generally superior build rate because of its higher energy density and scanning method.

The emitter 130 is generally a device that emits an electron beam (e.g., a charged particle beam), such as, for example, an electron gun, a linear accelerator, or the like. The emitter 130 generates an energy beam 131 that may be used for melting or fusing together the raw material 141 when spread as the powder layer 112 on the build platform 111. In some examples, the emitter 130 may include at least one focusing coil, at least one deflection coil and an electron beam power supply, which may be electrically connected to an emitter control unit. In one illustrative example, the emitter 130 generates a focusable electron beam with an accelerating voltage of about 60 kilovolts (kV) and with a beam power in the range of about 0 kilowatts (kW) to about 10 kW. The pressure in the vacuum chamber may be in the range of about $1 \times 10^{-3}$ mBar to about $1 \times 10^{-6}$ mBar when building the article 142 by fusing each successive powder layer 112 with the energy beam 131. The emitter 130 may sit in a gun vacuum chamber. The pressure in the gun vacuum chamber may be in the range of about $1 \times 10^{-4}$ mBar to about $1 \times 10^{-7}$ mBar. In some examples, the emitter 130 may emit a laser beam using direct metal laser melting (DMLM). The emitter 130 may emit laser to melt ultra-thin layers of metal powder to build a three-dimensional object. When using DMLM, a gas flow may be provided over a build in contrast with electron beam melting manufacturing that requires a vacuum chamber.

In some examples, the emitter 130 may be communicatively coupled to the control component 120, as indicated in FIG. 1 by the dashed line between the emitter 130 and the control component 120. The communicative coupling of the emitter 130 to the control component 120 may provide an ability for signals and/or data to be transmitted between the emitter 130 and the control component 120, such as control signals from the control component 120 that direct operation of the emitter 130.

Still referring to FIG. 1, the imaging device 114 is generally located in the exterior environment 105 outside the build chamber 102, yet positioned such that the field of view 116 of the imaging device 114 is through the window 106 of the build chamber 102. The imaging device 114 is generally positioned outside the build chamber 102 such that the harsh environment within the interior 104 of the build chamber 102 does not affect operation of the imaging device 114. That is, the heat, dust, metallization, x-ray radiation, and/or the like that occurs within the interior 104 of the build chamber 102 will not affect operation of the imaging device 114. In some examples, the imaging device 114 is fixed in position such that the field of view 116 remains constant (e.g., does not change). Moreover, the imaging device 114 is arranged in the fixed position such that the field of view 116 of the imaging device 114 encompasses an entirety of the powder bed 110. That is, the imaging device 114 is capable of imaging the entire powder bed 110 within the build chamber 102 through the window 106.

In some examples, the imaging device 114 is a device particularly configured to sense electromagnetic radiation, particularly heat radiation (e.g., thermal radiation) that is generated by the various components within the powder bed 110 (e.g., the powder layer 112, the raw material 141, and/or the article 142). Thus, the imaging device 114 may generally be a device particularly tuned or otherwise configured to obtain images in spectra where heat radiation is readily detected, such as the visible spectrum and the infrared spectrum (including the far infrared and the near infrared spectrum). As such, one illustrative example of a device particularly tuned or otherwise configured to obtain images in spectra where heat radiation includes, but is not limited to, an infrared camera. In some examples, the imaging device 114 may be a camera that is sensitive within a range of wavelengths of about 1 micrometer($\mu$m) to about 14 $\mu$m, including about 1 $\mu$m, about 2 $\mu$m, about 3 $\mu$m, about 4 $\mu$m, about 5 $\mu$m, about 6 $\mu$m, about 7 $\mu$m, about 8 $\mu$m, about 9 $\mu$m, about 10 $\mu$m, about 11 $\mu$m, about 12 $\mu$m, about 13 $\mu$m, about 14 $\mu$m, or any value or range between any two of these values (including endpoints). As such, the imaging device 114 is suitable for imaging temperatures which occur during EBM or DMLM of the powder layer 112. In some examples, the wavelength sensitivity of the imaging device 114 may be selected in accordance with the type of raw material used. Illustrative examples of suitable devices that may be used for the imaging device 114 include, but are not limited to, an IR-camera (Infrared-camera), NIR-camera (Near Infrared-camera), a VISNIR-camera (Visual Near Infrared-camera), a CCD camera (Charged Coupled Device-camera), a line-scan camera, and a CMOS-camera (Complementary Metal Oxide Semiconductor-camera).

In some examples, the imaging device 114 may be an area scan camera that is capable of providing data specific to one or more regions of interest within the field of view 116, including regions of interest that move within the field of view 116. That is, an area scan camera includes a matrix of pixels that allows the device to capture a 2D image in a single exposure cycle with both vertical and horizontal elements. Area scan cameras can further be used to obtain a plurality of successive images, which is useful when selecting regions of interest within the field of view 116 and observing a change in the regions of interest, as described in greater detail herein. Illustrative examples of such area scan cameras include those available from Basler AG (Ahrensburg, Germany), JAI Ltd. (Yokohama, Japan), National Instruments (Austin, TX), and Stemmer Imaging (Puchheim, Germany). In some examples, the imaging device 114 may be a line scan camera that can be used for jet pattern detection and/or power deposition anomaly detection for short feed, clumping, pushing, etc.

In some examples, the imaging device 114 may have a monochrome image sensor. In other examples, the imaging device 114 may have a color image sensor. In various examples, the imaging device 114 may include one or more optical elements, such as lenses, filters, and/or the like. In a particular example, the imaging device 114 may include a Bayer filter. As is generally understood, a Bayer filter is a color filter array (CFA) for arranging RGB color filters on a square grid of photosensors to create a color image, such as a filter pattern of about 50% green, about 25% red, and about 25% blue.

In some examples, the imaging device 114 may further be a device particularly configured to provide signals and/or data corresponding to the sensed electromagnetic radiation to the control component 120. As such, the imaging device 114 may be communicatively coupled to the control component 120, as indicated by the dashed lines depicted in FIG. 1 between the imaging device 114 and the control component 120.

It should be understood that, by locating the imaging device 114 in the exterior environment 105 outside the interior 104 of the build chamber 102, it is possible to easily retrofit existing build chambers having windows in the chamber walls 103 therein with a kit that includes the imaging device 114 so as to upgrade the existing build chambers with the capabilities described herein.

The control component 120 (also referred to as the additive machine controller) is generally a device that is communicatively coupled to one or more components of the additive manufacturing system 100 (e.g., the powder distributor 108, the imaging device 114, and/or the emitter 130) and is particularly arranged and configured to transmit and/or receive signals and/or data to/from the one or more components of the additive manufacturing system 100, such as the imaging device 114, one or more sensors 150-151 (residual oxygen percentage sensor, laser rail temperature sensor, dew point temperature sensor, heating temperature sensor, differential pressure sensor, etc.) positioned with respect to (e.g., on or within components of) the additive manufacturing system 100 to record temperature, motion, vibration, power, etc.

In certain examples, each optical system (e.g., DMLM) can include a field programmable gate array (FPGA), and additive manufacturing machines can have multiple process cameras including still, in-weld (long exposure), video, infrared (IR), etc.

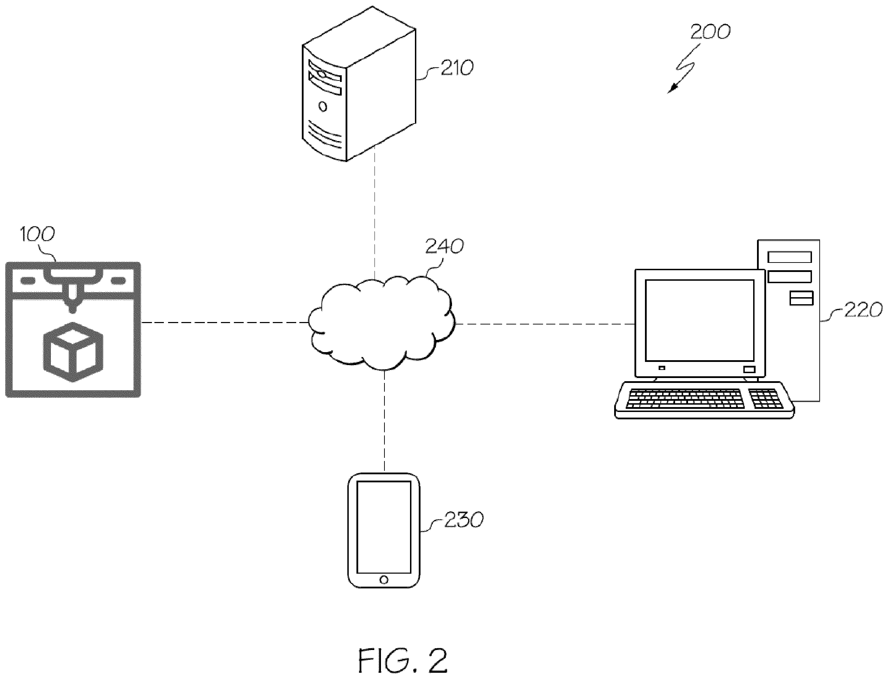

FIG. 2 is a block diagram of an example architecture 200 according to one or more examples shown and described herein. In certain examples, the architecture or infrastructure 200 can include the additive manufacturing machine 100, a server 210, a user computing device 220, and a mobile computing device 230. One or more of the server 210, the user computing device 220, or the mobile computing device 230 can implement the additive machine controller 120, for example. The additive manufacturing machine 100 (also referred to herein as an additive machine, additive manufacturing system, additive manufacturing device, and/or additive manufacturing apparatus) can be communicatively coupled to the server 210, the user computing device 220, and the mobile computing device 230 by a network 240. In certain examples, the network 240 can include one or more computer networks (e.g., a personal area network, a local area network, or a wide area network), cellular networks, satellite networks and/or a global positioning system and combinations thereof. Accordingly, the user computing device 220 can be communicatively coupled to the network 240 via a wide area network, via a local area network, via a personal area network, via a cellular network, via a satellite network, etc. Suitable local area networks can include wired Ethernet and/or wireless technologies such as, for example, wireless fidelity (Wi-Fi). Suitable personal area networks can include wireless technologies such as, for example, IrDA, Bluetooth®, Wireless USB, Z-Wave, ZigBee, and/or other near field communication protocols. Suitable cellular networks include, but are not limited to, technologies such as LTE, WiMAX, UMTS, CDMA, and GSM.

In certain examples, the additive manufacturing system 100 can transmit captured information such as images, sensor signals (e.g., open platform connections unified architecture (OPC UA) signals, etc.), build states, log files, etc., related to builds to the server 210, the user computing device 220, and/or the mobile computing device 230. The log files can include a plurality of parameters that are output from a plurality of subsystems of the additive manufacturing system 100 such as a vacuum system, a beam system, a powder layering system, and the like. The plurality of parameters may be raw data output from the additive manufacturing system 100, or parameters further processed based on machine operations. For example, parameters can be processed based on domain knowledge and/or one or models, such as physics-based, statistical, and/or mathematical models, to generate new features and/or parameters. The combination and analysis of multiple machine functions and metadata can identify, for example, parameter issues affecting a machine, process, build, etc. For example, smoke and/or soot deposition can be detected, which indicates an inadequate gas flow, incorrect speed/beam/power parameter(s) (e.g., set too high, etc.), etc. Machine health and process data can together indicate an effect on build and part quality. In certain examples, 'raw' black-box sensor readings can be tracked but not recorded in the broader log file. Such sensor data can include high bit rate values that, when selected, can provide additional insights and finer granularity regarding remaining useful life of an additive manufacturing machine component, for example (e.g., with respect to consumables, etc.). The image data, sensor data, and/or log files can be stored in the server 210, the user computing device 220, and/or the mobile computing device 230.

The server 210 generally includes processors, memory, and chipsets for delivering resources via the network 240. Resources can include providing, for example, processing, storage, software, and information from the server 210 to the user computing device 220 via the network 240. The server 210 can store and/or dynamically compute machine learning models or statistical models on parameters/features from the additive manufacturing system 100. The user computing device 220 generally includes processors, memory, and chipsets for communicating data via the network 240.

Referring to FIG. 2, the mobile computing device 230 can be any device having hardware (e.g., chipsets, processors, memory, etc.) for communicatively coupling with the network 240. Specifically, the mobile computing device 230 can include an antenna for communicating over one or more of the wireless computer networks described above. Moreover, the mobile computing device 230 can include a mobile antenna for communicating with the network 240. Accordingly, the mobile antenna may be configured to send and receive data according to a mobile telecommunication standard of any generation (e.g., 1G, 2G, 3G, 4G, 5G, etc.). Specific examples of the mobile computing device 230 include, but are not limited to, smart phones, tablet devices, e-readers, laptop computers, or the like. The mobile computing device 230 can have a display similar to the display device 408 of the user computing device 220 and display user interfaces.

Referring to FIG. 2, the network 240 generally includes a plurality of base stations that are configured to receive and transmit data according to mobile telecommunication standards. The base stations are further configured to receive and transmit data over wired systems such as public switched telephone network (PSTN) and backhaul networks. The network 240 can further include any network accessible via the backhaul networks such as, for example, wide area networks, metropolitan area networks, the Internet, satellite networks, or the like. Thus, the base stations generally include one or more antennas, transceivers, and processors that execute machine readable instructions to exchange data over various wired and/or wireless networks.

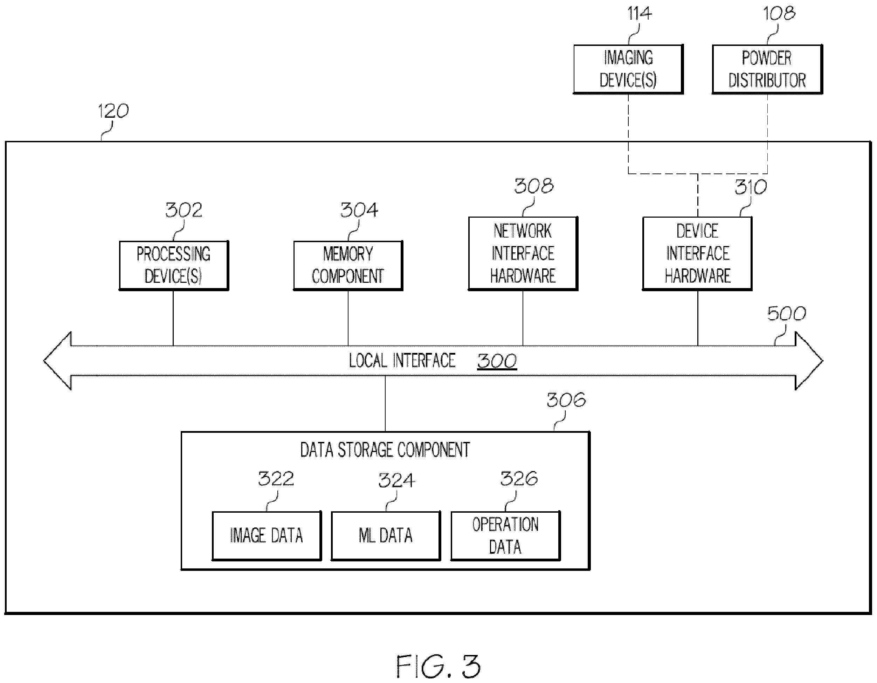

Turning to FIG. 3, the various internal components of the control component, also referred to herein as an additive machine controller, 120 depicted in FIG. 1 are shown. Particularly, FIG. 3 depicts various system components for collecting parameters and images for operating the additive manufacturing system 100, analyzing parameters and image data and/or assisting with the control of various components of the additive manufacturing system 100 depicted in FIG. 1.

As illustrated in FIG. 3, the additive machine controller 120 can include one or more processing devices 302, a non-transitory memory component 304, network interface hardware 308, device interface hardware 310, and a data storage component 306, all of which are interconnected by a local interface 300, such as a bus or the like.

The one or more processing devices 302, such as a computer processing unit (CPU), may be the central processing unit of the additive machine controller 120, performing calculations and logic operations to execute a program. The one or more processing devices 302, alone or in conjunction with the other components, are illustrative processing devices, computing devices, processors, or combinations thereof. The one or more processing devices 302 can include any processing component configured to receive and execute instructions (such as from the data storage component 306 and/or the memory component 304).

The memory component 304 can be configured as a volatile and/or a nonvolatile computer-readable medium and, as such, can include random access memory (including SRAM, DRAM, and/or other types of random access memory), read only memory (ROM), flash memory, registers, compact discs (CD), digital versatile discs (DVD), and/or other types of storage components. The memory component 304 can include one or more programming instructions thereon that, when executed by the one or more processing devices 302, cause the one or more processing devices 302 to complete various processes.

Still referring to FIG. 3, the programming instructions stored on the memory component 304 can be embodied as a plurality of software logic modules, where each logic module provides programming instructions for completing one or more tasks.

Still referring to FIG. 3, the network interface hardware 308 can include any wired or wireless networking hardware, such as a modem, LAN port, wireless fidelity (Wi-Fi) card, WiMax card, mobile communications hardware, and/or other hardware for communicating with other networks and/or devices. For example, the network interface hardware 308 can be used to facilitate communication between the additive manufacturing system 100 and external devices such as the server 210, the user computing device 220, the mobile computing device 230 and the like via a network 240 as shown in FIG. 2.

Referring to FIG. 3, the device interface hardware 310 can communicate information between the local interface 300 and one or more components of the additive manufacturing system 100 of FIG. 1. For example, the device interface hardware 310 can act as an interface between the local interface 300 and the imaging device 114 of FIG. 1, the powder distributor 108, and/or the like. In some examples, the device interface hardware 310 can transmit or receive signals and/or data to/from the imaging device 114 of FIG. 1 and/or other sensors.

Still referring to FIG. 3, the data storage component 306, which may generally be a storage medium, can contain one or more data repositories for storing data that is received and/or generated. The data storage component 306 can be any physical storage medium, including, but not limited to, a hard disk drive (HDD), memory, removable storage, and/or the like. While the data storage component 306 is depicted as a local device, it should be understood that the data storage component 306 can be a remote storage device, such as a server computing device, cloud based storage device, or the like. Illustrative data that can be contained within the data storage component 306 includes, but is not limited to, image data 322, machine learning (ML) data 324, and/or operation data 326. The image data 322 can generally be data that is used by the control component 120 to recognize particular objects, determine one or more points on the powder layer 112 (FIG. 1), monitor an amount of electromagnetic radiation at the one or more points, determine a change in electromagnetic radiation, and/or the like. For example, the additive machine controller 120 can access the image data 322 to obtain a plurality of images received from the imaging device 114, determine an amount of electromagnetic radiation from the image data 322, and generate one or more commands accordingly.

Still referring to FIG. 3, the ML data 324 can be data that is generated as a result of one or more machine learning processes or statistical modelling processes used to determine features of the powder layer 112 (FIG. 1) from the image data 322. Still referring to FIG. 3, the operation data 326 can include parameters output from a plurality of subsystems from the additive manufacturing system 100. For example, the operation data 326 can include parameters output from a vacuum system, an inertization system, a beam system, a powder layering system, and the like. Specifically, parameters for the beam system can include, but are not limited to, a maximum power supply voltage, a minimum power supply voltage, a filament burn time, an average preheat grid voltage, a grid voltage drop after arctrip, an average cathode power, an average effective work function, an average smoke count, a smoke warning, an average column pressure, a number of arc trips, a maximum deviation in grid voltage, a grid voltage at 2mA, and the like. Parameters for the vacuum system can include, but are not limited to, a maximum chamber pressure, a minimum chamber pressure, a maximum column pressure, a minimum column pressure, a vacuum failure error, an average variation in chamber vacuum, a minimum helium supply line pressure, an average current in chamber turbo pump, an average current in column turbo pump, a turbo pump idle duration, an average internal circuit temperature, an average incoming cooling water temperature, and the like.

It should be understood that the components illustrated in FIG. 3 are merely illustrative and are not intended to limit the scope of this disclosure. More specifically, while the components in FIG. 3 are illustrated as residing within the additive machine controller 120, this is a non-limiting example. In some examples, one or more of the components can reside external to the additive machine controller 120.

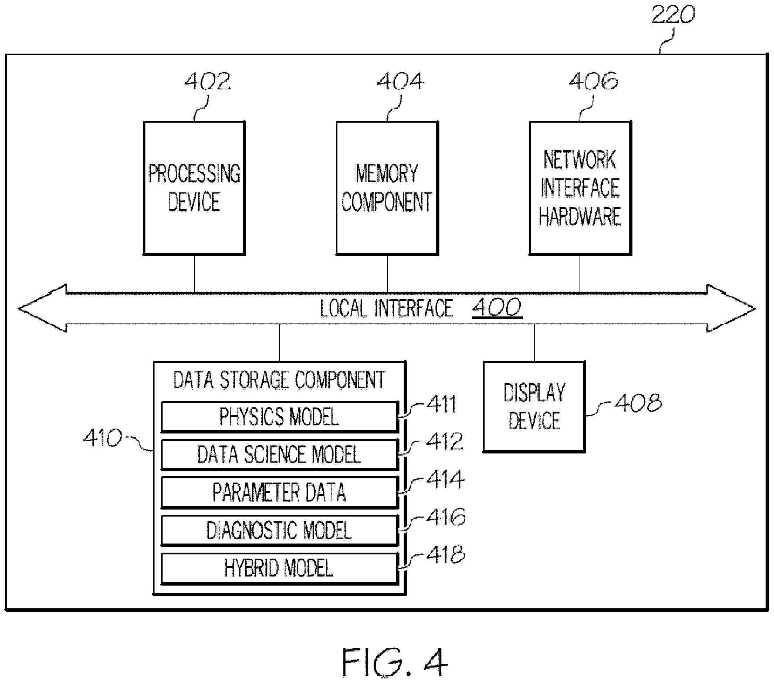

FIG. 4 depicts the various internal components of the user computing device 220 depicted in FIG. 2. As illustrated in FIG. 4, the user computing device 220 can include one or more processing devices 402, a non-transitory memory component 404, network interface hardware 406, a display device 408, and a data storage component 410, all of which are interconnected by a local interface 400, such as a bus or the like. While FIG. 4 depicts the components of the user computing device 220, the server 210 in FIG. 2 can have the same or similar components as illustrated in FIG. 4.

The one or more processing devices 402, such as a computer processing unit (CPU), can be the central processing unit of the user computing device 220, performing calculations and logic operations to execute a program. The one or more processing devices 402, alone or in conjunction with the other components, are illustrative processing devices, computing devices, processors, or combinations thereof. The one or more processing devices 402 can include any processing component configured to receive and execute instructions (such as from the data storage component 410 and/or the memory component 404).

The memory component 404 can be configured as a volatile and/or a nonvolatile computer-readable medium and, as such, can include random access memory (including SRAM, DRAM, and/or other types of random access memory), read only memory (ROM), flash memory, registers, compact discs (CD), digital versatile discs (DVD), and/or other types of storage components. The memory component 404 can include one or more programming instructions thereon that, when executed by the one or more processing devices 402, cause the one or more processing devices 402 to diagnose a component or a build of the additive manufacturing system.

Still referring to FIG. 4, the display device 408 can include any medium capable of transmitting an optical output such as a cathode ray tube, a light emitting diode (LED) display, an organic light emitting diode (OLED) display, a liquid crystal display, a plasma display, or the like. In some examples, the display device 408 can be a touchscreen that, in addition to visually displaying information, detects the presence and location of a tactile input upon a surface of or adjacent to the display device 408.

Still referring to FIG. 4, the data storage component 410, which can generally be a storage medium, can contain one or more data repositories for storing data that is received and/or generated. The data storage component 410 can be any physical storage medium, including, but not limited to, a hard disk drive (HDD), memory, removable storage, and/or the like. While the data storage component 410 is depicted as a local device, it should be understood that the data storage component 410 can be a remote storage device, such as a server computing device, cloud based storage device, or the like. As shown in the example of FIG. 4, the data storage component 410 can store one or more models and/or data, such as a physics model 411, a data science model 412, parameter data 414, a diagnostic model 416, a hybrid model 418, etc.

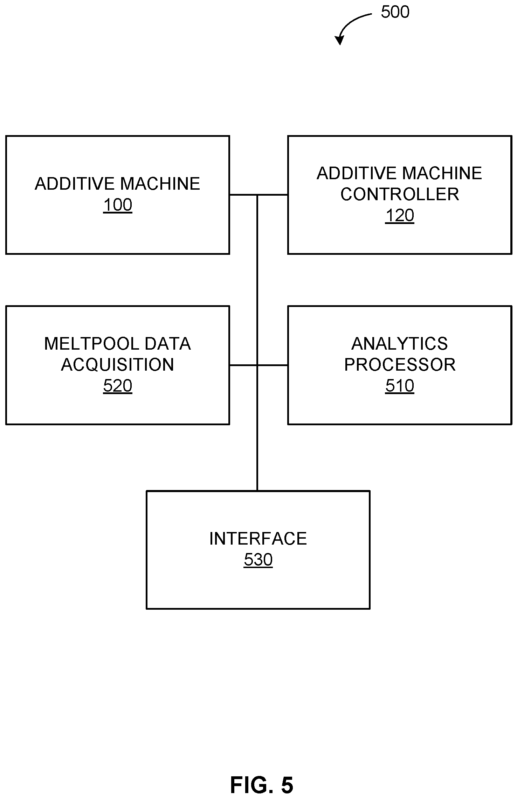

FIG. 5 illustrates an example infrastructure or framework 500 to monitor and adjust additive manufacturing based on machine health monitoring and analysis. In the example framework 500 of FIG. 5, the additive manufacturing machine 100 and its controller 120 are in communication with an analytics processor 510 which leverages meltpool data acquisition 520 and information from the additive manufacturing machine 100 and/or its control computer 120 to model the additive machine 100 and its operation, assess a health of the additive manufacturing machine 100, score or otherwise evaluate build quality (e.g., layerwise in real time or near real time, etc.), and/or otherwise monitor, model, evaluate, and modify a configuration, performance, control, etc., of the additive manufacturing machine 100. While the analytics processor 510 is shown as a single device in the example of FIG. 5, the analytics processor 510 can be implemented as one or more FPGAs, processors, trusted platform modules (TPMs), and/or other computing devices, for example. When the analytics processor 510 is implemented using a plurality of devices, the FPGA(s) and processor(s) can coordinate with each other toward a common data fusion and/or analysis. The multiple devices can be synchronized to a same time base, build metadata, and/or machine control events, for example.

A plurality of process parameters affect the microstructure and mechanical properties of a 3D printed object using a powder bed fusion and/or other laser-based melting process, including scanning speed (e.g., in millimeters per second (mm/s), etc.), beam speed/speed function, beam current or beam power (e.g., in Watts (W), etc.), layer thickness (e.g., in mm, etc.), powder layer uniformity, and line offset. Such parameters can be adjusted and/or optimized to result in desired 3D printed object properties. For example, beam power, scan speed, spacing, layer thickness, etc., affect an energy density (e.g., average applied energy per volume of material, J/mm3). In some examples, the beam speed can be adjusted near an edge of the object to prevent overheating. Layer thickness (e.g., 50-150um) affects geometric accuracy of a fabricated object and can be varied depending on the type of 3D printer used, as well as other process parameters such as material powder particle size, etc. Additionally, a scanning pattern and scanning speed also affect the final 3D printed object microstructure and porosity. For example, a scanning pattern (e.g., cross-section of layer) represents the geometric track of the electron beam, laser beam, and/or other energy beam 131 used to melt the metal powder to form a cross-section on a powder bed/build area. Such geometries can include outer contours, inner contours, and/or a hatch pattern, for example.

Issues with other components aside from the energy beam 131 can also result in build defects and/or process imperfections. For example, obstacles or abruptions in powder fetching and spreading on the build plate or platform 111 can also cause imperfections in a resulting build part. Other components can also be analyzed and associated abnormalities or issues identified/predicted and addressed. For example, the laser/emitter 130 may have low power issues, material issues, etc. A scanner can experience issues with wear (e.g., detectable via a pattern), speed (e.g., detectable with respect to time), etc. Wear can also be evaluated with respect to movable components such as pump(s), motor build chamber motor powder chamber, motor recoater, build module, for example. One or more sensors (e.g., optic temperature sensor, oxygen sensor, pressure sensor, temperature sensor, dew point sensor, etc.) can be evaluated for accuracy, for example. Functionality and/or performance can be evaluated for one or more components such as a collimator, optics chiller, valve(s), seal(s), etc. Control board(s) can be evaluated with respect to runtime, mean-time-to-failure (MTTF), etc., for example.

Parameters/settings involved in other modalities can differ from those described above. For example, in a BinderJet system, both single layer statistical process control (SPC) and multi-layer SPC can be facilitated. Such SPC can include image-based defect detection including powder bed monitoring with a short spread and closed loop control to trigger another dose and recoat. SPC can also include image-based defect detection with powder bed monitoring wherein streaking/pushing of powder indicates recoater damage resulting in a recoat close loop control or stop build. Image-based defect detection can also include jetting health with pattern test image analysis (e.g., pre-print, jet onto paper a pattern, image and analyze, etc.) in a closed loop to re-clean the jet automatically with a solvent. In certain examples, jetting health can include a jetting onto powder analysis (e.g., image binder on powder, potentially with IR camera, and check binder deposition into powder, etc.) in a closed loop to re-clean the jet automatically with a solvent. Image-based defect detection can also include geometric conformance with analysis of jetting onto powder versus an expected geometry. Images can be used to compare an expected geometry to an actual geometry, for example. BinderJet analysis can also involve closed loop control of curing parameters, recoat parameters, jetting parameters, etc. Curing parameters (e.g., IR lamp intensity, etc.) can be modified based on real-time (or substantially real-time) health (e.g., based on powder bed temperature, images, etc.). Recoat parameters (e.g., dosing factor, roller speed, etc.) can be modified based on real-time (or substantially real-time) health (e.g., based on powder bed temperature from IR camera, images, etc.). Jetting parameters (e.g., measure/modify saturation, manifold pressures, drop velocity, etc.) can be modified based on real-time health metrics (jetting quality, saturation, etc.) to enable detection, correction, and preventative measures. Other parameters, such as humidity, temperature, pressure, drive/pump current, and torque can all affect binding speed, quality, saturation of binder into the powder bed, and overall part quality. IR lamps that cure each layer of a build can be monitored in conjunction with these parameters (e.g., higher humidity can affect cure time and saturation). Lower IR temperature resulting from lamp degradation can affect print time and overall quality, etc.

In certain examples, trends in parameter values can be monitored over time. For example, some processes are sensitive to short-term spikes in value (e.g., oxygen, etc.), while other subsystems, such as optics, etc., are more sensitive over a longer duration (e.g., temperature, etc.).

In certain examples, one sensor can provide information about one parameter for one subsystem. In other examples, a plurality of sensors can be assigned to the subsystem such that different types of sensors provide different types of data with respect to one or more parameters for the subsystem. Using multiple sensors, more correlation can be established between parameters for the subsystem to drive improved error prediction, detection, and correction, for example. For example, both a leak in the system and wear out of a pump can cause inefficient operation of pump (e.g., resulting in higher speed operation). Monitoring oxygen (02) for cycling and//or monotonic increase simultaneously helps in isolating the leak and/or pump wear, for example. Such monitoring provides a Bayesian approach to monitoring, analyzing, and predicting/detecting an issue, error, or anomaly to be corrected, for example.

Certain examples provide multimodal data fusion for near real-time detection, diagnosis and prediction of additive machine, process health, and build quality. The layerwise printing process of additive manufacturing technology allows for data capture of the printing process from the first layer to last layer of a printed part. This data can include but is not limited to part design, material parameter definition, machine settings and configurations, as well as sensor and programmable logic controller (PLC) data, logging information, software errors/warnings, and other build information such as recoat imaging and print video.

Within a given build, for example, intelligent data weighting can be used to identify an anomaly across one or more layers. A decay strategy can also be employed across one more layers because a single layer anomaly can become a multi-layer concern sometimes. However, other times, a problem in one layer can be naturally cured by thermal effects from surrounding layers, etc. Weighting factors and employing decay can be helpful in identifying anomalies and evaluating whether the anomaly is likely to spread to other layers or be corrected by other layers, for example.

Weighting can be applied, for example, when monitoring trends in a process and/or parameter over time. Weighting can be applied depending on the process and/or parameter when evaluating processes that are sensitive to short-term spikes in value (e.g., oxygen, etc.) versus subsystems, such as optics, etc., that are more sensitive over a longer period of time (e.g., temperature, etc.).

Decay strategies can also be helpful to monitor change and degradation over time. For example, decay strategies can be useful when analyzing component life and predicting remaining useful life and/or desirability of proactive maintenance. Decay strategies can be used to help confirm or deny whether a build can continue or should be aborted. Decay strategies can also be used to confirm/deny whether an additive machine should be shut down for preventative maintenance earlier or later than scheduled, for example.

Certain examples provide a foundational data architecture to facilitate data fusion and establish a complete digital genealogy for each 3D print. With this foundation, statistical process control methods can be utilized to monitor machine, process, and part health in situ throughout the build process on a layer-wise basis to detect anomalies, defects, and enable closed loop control and correction, for example. In certain examples, a same machine and/or multiple machines can experience variability across multiple builds. One or more additive manufacturing machines repeating builds for the same part can leverage such foundational data to compare/contrast build health including statistical processor control analysis of subsystem components and process variables/configuration, for example.

Certain examples enable real-time monitoring of an additive build process, machine quality, and build quality. During a build, as a layer is created, health and performance analysis is performed to determine if there are any critical issues so that an operator can take timely action. Health and performance analysis can relate to build and/or print health, machine performance and/or part quality, etc. Multi-modal data (e.g., time series data from installed sensors, simulation/compensation modeling results, build inputs, settings, images from optical and/or infrared cameras related to powderbed, meltpool, etc.) is fed to a hybrid model that includes a series of analytical modules (e.g., data science, statistics, and additive domain-based physics). The hybrid model filters and/or otherwise pre-processes the data for feature extraction, signal-to-noise ratio (SNR) enhancements, etc., and then feeds the processed data to analytics models that compute physics-based metrics, which are further analyzed using data-science models based on one of more methods such as, statistical process control (SPC), statistics, Bayesian, machine learning, etc., to determine an overall quality of the process and a health of the additive manufacturing machine. The health metrics and model results are further combined using probabilistic models to determine an overall severity (e.g., health) score for the layer as well as individual quality scores for each 'critical x' associated with each modality. Single-layer scoring, multi-layer scoring, etc., can be determined and used to detect, correct, and prevent issues with a build, process, and/or device. Modalities can include but are not limited to DMLM, EBM, DCAT, and BinderJet, for example.

The analysis enables health detection and diagnosis of the build process, additive manufacturing machine, and build quality at an individual layer level and over multiple layers using multi-layer analytics, trend analysis, change point detection, cumulative damage assessment etc. While a build is progressing, cumulative damage assessment is performed based on performance of previous layers leading to improved confidence of health and/or anomaly detection and correction as the build progresses as well as an overall health diagnosis of an entire build at the end of the build. The cumulative damage assessment can be quantified as a summation of severity multiplied by duration of associated operational condition (e.g., Cumulative damage assessment=Summation(Severity * Duration of operational condition)), for example. The cumulative damage assessment can help to isolate a main variable of concern out of several potential variables, which enables targeted rectification of an issue. Further, the cumulative assessment helps encapsulate memory of the operation of a component over several past builds, rather than beginning monitoring of a current build with no prior context or information. In certain examples, forecasting and/or other prediction can be provided based on prior build data, trend analysis, etc., to identify issues before the issues occur and/or before the issues become a problem affecting the build of a part or machine performance.

These analytics are performed on a separate, secure computing device isolated from control operations to minimize risk to additive build machine performance. The authenticity and integrity of the analytics application code is securely protected with one or more integrated Trusted Platform Modules (e.g., implemented on one or more FPGAs, etc.), for example. As such, a root of trust is established between the analytics processor 510 and the additive manufacturing machine 100 (and, in some examples, the additive machine controller 120). Analytics results are displayed with live update on a web-based human machine interface (HMI). The HMI can be accessed by the printer's control computer and/or remotely via network connection, for example.

As illustrated in the example of FIG. 5, the analytics processor 510 provides in-situ monitoring of the additive manufacturing machine 100 during a build of a part or set of parts. The example analytics processor 510 can apply analytics to its real-time (or substantially real-time given transmission and/or processing latency, etc.) monitoring to determine additive machine 100 health. Rather than extracting data from the machine 100 at the end of a build, the analytics processor 510 receives and processes data during a build and provides automated quality scoring of the machine, process, and/or build data. The analytics processor 510 can facilitate layerwise process monitoring of machine health, build process health, and/or part quality, for example. Such monitoring can be facilitated by acquisition of real-time (or substantially real-time) data from one or more on-machine sensors, cameras, etc. Acquired information is analyzed using statistical and/or artificial intelligent (AI) models to determine a quality score of machine health, process health, and/or part quality, for example. Data is transferred from the additive machine 100, additive machine controller 120, etc., to the analytics processor 510. In certain examples, meltpool data from the additive machine 100 is gathered by the meltpool data acquisition circuitry 520 and provided to the analytics processor 510.

By providing the analytics processor 510 separate from the additive manufacturing machine 100 or the additive machine controller 120, the dedicated analytics processor 510 can perform high-compute processes without reducing efficiency or speed of the additive manufacturing machine 100 itself. The analytics processor 510 is isolated from the additive manufacturing machine 100, processing information from the additive manufacturing machine 100 without interfering with operation of the additive manufacturing machine 100 unless the processing reveals a problem and an adjustment to be made to the machine settings, process configuration, current and/or subsequent build, etc. The analytics processor 510 can examine specific processes of the additive manufacturing machine 100 (e.g., melting, recoating, etc.) as well as the overall health of the machine, process, build, etc., on a layer-by-layer basis. Certain examples provide a modular architecture that can be configured and extended to a plurality of product lines (e.g., M2, Mline, etc.), modalities (e.g., EBM, binder jet, etc.), and the like. Feedback and/or adjustment can be provided to the additive manufacturing machine 100 and/or the additive machine controller 120 during a build, for example. Additionally, layer-wise analysis can help to detect/record a moment at which a variation occurs, for example.

Physics and interplay of parameters is built into the analytics of the analytics processor 510. Analysis is enriched with knowledge of the additive manufacturing machine 100, sensor(s), and interplay between material parameters and machine operation, for example. Correlations and physical properties can be affected by input parameters of materials, additive manufacturing machine 100 configuration (e.g., gas flow, beam speed, and laser power, layer thickness of deposited powder, etc.), etc. Correlations can include correlation of log/time series, static images (e.g., thermal, still, infrared (IR), etc.), video, SPC and quality score metadata, and/or fusion thereof, for example.

FIG. 5 illustrates an example infrastructure or framework 500 to monitor and adjust additive manufacturing based on machine health monitoring and analysis. In the example framework 500 of FIG. 5, the additive manufacturing machine 100 and its controller 120 are in communication with an analytics processor 510 which leverages meltpool data acquisition 520 and information from the additive manufacturing machine 100 and/or its control computer 120 (e.g., from the camera or other imaging device 114, emitter 130, build plate/platform 111 and positioner and/or other lifting component 113, sensor(s) 150-151, etc.) to model the additive manufacturing machine 100 and its operation, assess a health of the additive manufacturing machine 100, score or otherwise evaluate build quality (e.g., layerwise in real time or near real time, etc.), and/or otherwise monitor, model, evaluate, and modify a configuration, performance, control, etc., of the additive manufacturing machine 100.

As such, the additive machine controller 120 can act on information provided by the analytics processor 510 to adjust or correct operation of the additive machine 100. As described further below, the analytics processor 510 performs layerwise analysis to detect and/or predict an error or other issue to drive a correction or modification to affect a current layer, future layer, future build, etc. Single and/or multi-layer analysis by the analytics processor 510 can correct, optimize, and/or otherwise improve future layers, for example.

For example, multi-layer laser health monitoring can be enabled by the analytics processor 510 implemented with a combination of FPGA data capture and analysis of laser power delivered versus expected or commanded laser power. Over time, laser power can degrade and/or laser calibration can fade and/or drift. The analytics processor 510, alone or in conjunction with one or more FPGAs, can monitor commanded power and position and detect/correct alignment issues, for example. Similarly, over multiple layers, health of a scanner galvanometer can also be observed including drift in accuracy over time related back to galvanometer temperature. The hotter the temperature, the greater probability that the scanner is experiencing wear, which affects accuracy, etc. Additionally, current, torque, optical drift, and/or changes in meltpool intensity can be connected and correlated to a variability that is affecting part quality, for example.

The analytics processor 510 provides an analysis of sub-systems of the additive machine 100 and its processes to generate build process optimization, inspection advice, and/or predictive machine maintenance, for example. The analytics processor 510 uses multi-sensor time series analysis, image analytics, correlation analysis, etc., across sensor, logfile, and other machine health and process data (images, meltpool emissivity, etc.). Near-real time analysis by the analytics processor 510 enables the additive manufacturing machine 100 and/or an associated user to make timely decisions, adjustments, etc., to affect machine/material as well as post-process work in progress (WIP) cost avoidance during a build (without having to wait or depend on post processing inspection), for example. The analytics processor 510 uses automatic data transfer and data analysis of each layer as the build is printed. The analytics processor 510 is a separate and secure analytics compute platform with a delay no longer than one layer behind the current layer being printed, for example, which does not interfere with the additive machine 100 but allows near-real time monitoring and adjustment of the additive manufacturing machine 100, for example. The analytics processor 510 can include physics-based models leveraging system expertise and additive physics to model the structure, configuration, and operation of the additive machine 100 and its associated process(es) and build(s), for example. Alternatively or additionally, the analytics processor 510 can include one or more data science models for diagnosis and/or prediction of machine, process, and/or build errors. In certain examples, the analytics processor 510 leverages one or more fusion models combining physics and data science to determine/predict an outcome. In certain examples, the analytics processor 510 is constructed with a modular architecture to help ensure faster adoption to new product lines and modalities (e.g., EBM, DMLM, BinderJet, DCAT, etc.) through easy reuse and 'swapping' of modality and/or product line software Docker containers (e.g., 20-30%) while retaining common analytic and software capabilities (e.g., 70%).

In certain examples, the analytics processor 510 provides statistical process control (SPC) using automatic SPC calculation of X "most important" variable for a given modality. Layer-by-layer analysis and visualization includes sub-systems, processes, and sub-processes of the additive manufacturing machine 100. Multi-layer analysis is used by the analytics processor 510 to form a cumulative damage assessment as the build progresses as well as an overall end-of-build health state. Alternatively or in addition to the multi-layer analysis, a multitude or variety of sensors can be analyzed with SPC to form a cumulative assessment. SPC can be used to calculate individual sensor values, which can then be combined across a layer for a layerwise score, for example. As such, one or more data sets per sensor and/or one or more sensors can be evaluated, combined, etc. The analytics processor 510 can employ an array of analytics that are activated based on modality (e.g., DMI,M, EBM, BinderJet, DCAT, etc.), objective (which component or process), etc., enabling machine and/pr modality agnosticism, for example.

In certain examples, hybrid models (e.g., hybrid AI models) provide a fusion of additive process physics, machine know-how, and data science (e.g., SPC/Statistics/Bayesian/Machine Learning) to process data from the additive machine 100 and/or meltpool analyzer 520. 'Default' and 'configurable' analytics modules work with the models and enable machine and/or modality agnosticism in the analytics processor 510. For example, a default module can include circuitry and instructions for computing and extracting of statistical features. An example of a configurable module (e.g., a physics-based module) is circuitry and instructions for computing 'filter clogging coefficient' (for DMLM), 'cathode health coefficient', 'print head health' (for BinderJet), 'light projector health' (for DCAT), etc. Configurable analytics can change sensitivity of detection, for example. For example, a "sensitivity slider" can set increased or decreased sensitivity for trial/benchmarks versus "production/qualified" builds. Configurable software modules allow configuration and selection of type of data, frequency of data, storage location, etc. (e.g., wherein data includes sensor data, log data, image data, build parameters, etc.). Within a build, layer-wise monitoring of machine and process health performance through sensors, meltpool data, powder bed information, etc., enables automated inspection and modification of machine, process, and/or build, for example. The analytics processor 510 provides a dedicated compute device to help ensure isolation of compute resources from control operations of the additive machine controller 120 and the additive machine 100. The analytic sensitivity and/or severity of reported alert can be made configurable based on defined regions of interest within the build. For example, the image based analytics are configured according to region definitions that can include but are not limited to part boundaries, layer ranges, bounded areas, or bounded volumes.

In certain examples, analytics code authenticity and integrity are protected with one or more integrated Trusted Platform Module (TPM). Use of the TPM(s) can provide a hardware root of trust for the analytics processor 510, the additive machine controller 120, etc. (e.g., establishing a trusted relationship). The TPM(s) can provide a tamper-proof grounding for detection and correction of errors, for example. The root of trust can include ensuring the authenticity of signed and/or otherwise certified analytics, for example. In certain examples, a combination of TPM and code-signing provides enhanced security with the root of trust to enable the analytics processor 510 to communicate with and affect the machine controller 120, the additive machine 100, etc. The TPM supports disk encryption and boot chain to protect the authenticity and integrity of code on the analytics processor 510, for example. Signed/certified packages can be sent from the analytics processor 510 to the additive machine controller 120 and/or directly to the additive manufacturing machine 100 for secure update. In certain examples, an isolated environment, partition, or "sandbox" can be created at the analytics processor 510 and/or the additive machine controller 120 to test and compare potential build control algorithms for the additive manufacturing machine 100 to select one of the algorithms without negatively impacting the additive manufacturing machine 100 during the testing/simulation.

Alternatively or additional to physics-based models, data science models, and/or hybrid models, data-driven analytics can be provided using a neural network (NN) or convolutional neural network (CNN) model, random forest, and other AI/machine learning (ML) approach involving big data, manual defect characterization, and model training. In certain examples, the machine learning models are trained in an offline system with access to large data sets, and then the trained models are deployed to the analytics processor 510. In certain examples, the trained models are aided by the use of compute accelerators such as GPUs, VPUs, and/or FPGAs. As such, models can be trained on prior build data (e.g., showing "good" builds, errors, corrections, etc.), "gold" reference build data, etc., across one or more systems/builds, etc.

Thus, certain examples provide layer-wise process and machine health monitoring in real time or substantially real time. A layer-wise view of process variable build 'vital signs' with SPC metrics is provided using the analytics processor 510 for timely identification of process and machine performance deviations (e.g., layer-wise during a build, etc.). A multi-layer process view can also be provided for one or more geometrically complex areas of concern for a build. Multi-layer analysis provides more insights into particular areas/regions having more complex geometry, while simpler areas of a part may only involve a single layer analysis. The analytics processor 510 enables a mix of single- and multi-layer analysis depending upon part geometry, configuration, monitoring criterion, etc. The analytics processor 510 provides a "one-stop" solution for process monitoring features, sensors, and powder bed/binder applications, for example.

In certain examples, machine health and build quality monitoring are integrated with automated data transfer from the additive machine 100, the controller 120, and/or the meltpool data analyzer 520 (e.g., via the interface 530). On-machine sensors, data transfer, and single layer analysis can provide a layer health score as well as SPC metrics, for example. In certain examples, multi-layer sensor analysis can be used by the analytics processor 510 to determine a trend, detect a change point, etc. Analysis of the analytics processor 510 can be integrated with a modality-specific closed-loop control including recoat monitoring, binder application monitoring, powder bed monitoring (e.g., for shortfeed, protrusion, etc., in combination with gas flow, oxygen content, etc.) etc., for the additive machine 100. In certain examples, a monitored layer can be compared with a reference (e.g., "gold") layer to identify error(s) and/or other difference(s) with the current build. The reference or 'golden' layer may be digitally determined and/or generated from an actual build, for example. In certain examples, a reference or golden build formed of multiple layers can be leveraged. Overall equipment effectiveness (OEE), additive manufacturing machine 100 efficiency, and overall build health quality scoring (e.g., layerwise and multi-layer analysis) can be determined.

As such, machine health can be monitored, evaluated, and addressed using the example system 500. Machine faults can be detected and isolated by the analytics processor 510 (e.g., implemented as one or more processors, FPGAs, other computing devices, etc., to detect and/or predict additive manufacturing machine 100 failure modes from in-situ data). Machine health concerns can include degradation in optical train, recoater, gas flow, laser glass fouling detection, etc. Automatic calibration of the optics (e.g., beam alignment, multi-laser alignment, closed-loop spot size control, power calibration, etc.) can also be driven by machine health monitoring and analysis.

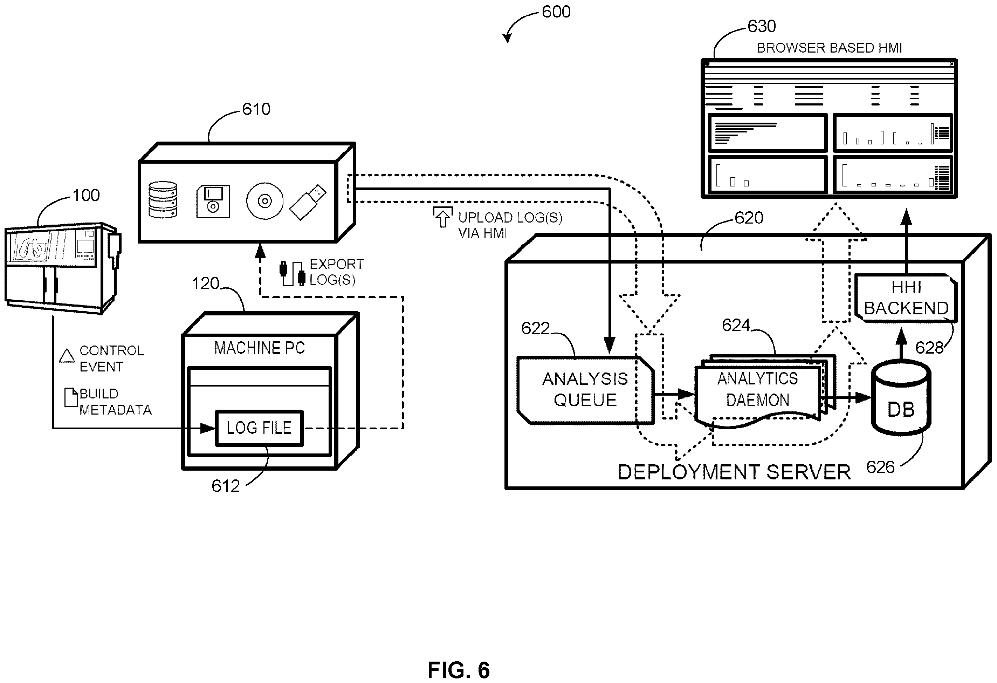

As described above, build and/or additive manufacturing machine health/issue, success/failure, etc., can be monitored and evaluated. Such analysis can be expanded across one or more builds on one or more machines to leverage identification of an issue in one build on one machine and extrapolate causation and effect to a solution on or more future builds on one or more additive manufacturing machines. Efficiency and quality improvement/optimization can be implemented for part and parameter development to drive higher quality and faster build time, for example. FIG. 6 illustrates a build variability analysis and adjustment and apparatus or infrastructure 600. The example apparatus or infrastructure 600 includes one or more additive manufacturing machines 100 and associated controller device(s) 120. A data storage 610 stores one or more log files 612, sensor data, image(s), etc., captured from the additive manufacturing machine 100 and/or its associated additive machine controller 120, for example.

As shown in the example of FIG. 6, data stored in the data storage 610 is ingested by a deployment server 620 (also referred to herein as a variability analyzer, a build variability analyzer, a build-to-build variability analyzer, a build analyzer device, build-to-build analyzer circuitry, etc.). The deployment server 620 ingests data from files stored in the data storge 610 (e.g., from multiple additive manufacturing machines 100, multiple builds, etc.) and organizes the files in an analysis queue 622, which triggers analytics executed using an analytics daemon or process/processor 624, which can be implemented using one or more containers, virtual machines, and/or other execution vessel/environments.

In certain examples, the analytics daemon 624 can be used to implement and store an artificial intelligence model, such as a machine learning model, etc. For example, a behavior analytics model, a behavior learning model, a predictive behavior analytics model, a correlation model, a golden build, etc., can be organized and stored for execution in the environment of a container of the analytics daemon 624. An output of analytics processing by the analytics daemon 624 is stored in a data store 626. Output from the data store 626 is made actionable through a backend interface 628, such as a browser-based interactive display 630, an interface to the additive manufacturing machine 100 and/or the additive machine controller 120, etc.

As such, variation in sensor values, images, etc., can be captured, organized, and used by one or more models to generate a "gold" or reference build (e.g., a build that met all requirements and matched desired specifications without error or other issue), evaluate which factor(s) resulted in a build deviating from the reference build, predict behavior of a machine and/or build, and the like. Identification of an issue and associated causation of that issue leads to a correction of the build, additive manufacturing machine, etc., to address and/or otherwise remedy the issue, for example. Trends can be established to predict a likely error or failure, which can result in the scheduling of maintenance for the additive manufacturing machine 100, adjustment of setting(s) for the additive manufacturing machine 100, adjustment of parameters for a build on the additive manufacturing machine 100, etc.

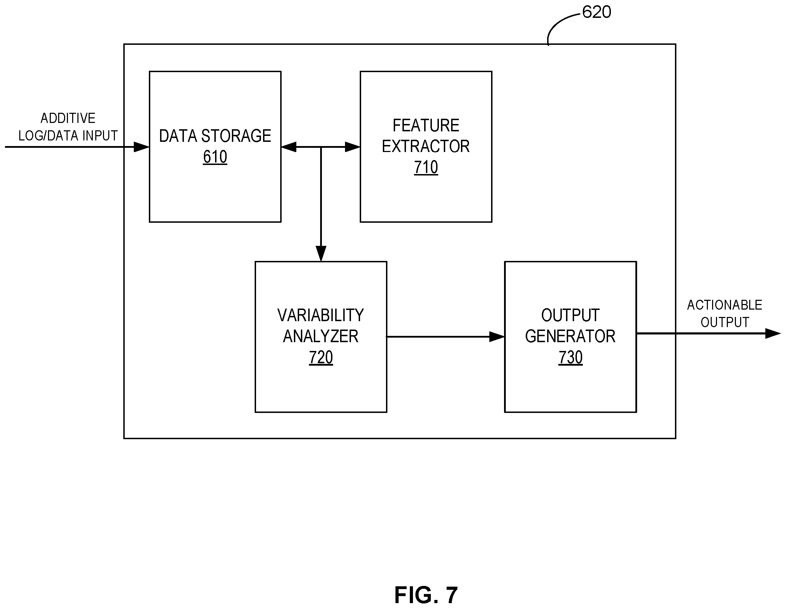

FIG. 7 illustrates an example configuration of the deployment server or computing device 620. In the example of FIG. 7, the data storage 610 may be implemented as part of the deployment server 620. As such, data from log files 612 and/or other sources (e.g., sensors, control systems, etc.) can be provided by the additive manufacturing machine 100, additive machine controller 120, etc., to the data storage 610 of the deployment server 620 (e.g., configured as a build-to-build variability analyzer). Data can include a variety of information including build times, sensor data, build/machine settings, etc.

The deployment server 620 leverages the data in the data storage 610 to generate meta data, parse time series data, group builds, etc. A feature extractor 710, which can be implemented as part of the analytics daemon 624, for example, processes the output of meta data, parsed time series data, grouped builds, etc., to extract features from the data including layer features, build features, etc. The feature extractor 710 can aggregate layer and/or build features for further analysis.

In certain examples, features are selected for different sensors 150-151 (e.g., event, filtering, inerting, lasing, recoating, etc.) of the additive manufacturing machine 100 based on one or more criterion such as data frequency, domain knowledge, statistical significance, technical fit, feedback, etc. For example, data points for a sensor type having densely recorded parameters (e.g., filter pressures, process chamber temperature, inert gas flow rate, process chamber pressure (e.g., MLine/EBM, etc.), recoater current/torque, cathode power, etc.) can be captured and/or arranged in a time series and averaged to determine a mean for a build. For sparsely recorded parameters (e.g., residual oxygen, optics frame/galvo scanner temperatures, chiller inlet/outlet temperatures, build plate temperature, dew point temperature, etc.), a time weighted average can be computed based on a duration of each parameter value, for example. Domain-specific parameters (e.g., filter coefficient, laser balance, divergence in the four galvo scanner temperatures (e.g., for MLine), divergence in the three optics frame temperatures (ine) signifying thermal gradient (e.g., for MLine), fluctuation of process chamber pressure, deviation in pump speed for a specific flow output, oxygen (02) sensor cycles above gas-off limit, maximum motor controller current for recoater/ build/dose chamber, etc.) can be evaluated to identified maximum and/or minimum values, for example. A standard deviation (e.g., to account for sensor sensitivity, moving range, etc.) can be computed for one or more features based on sample size, for example.

In some cases, cycling is normal (e.g., O2 levels rise before inertization kicks in, pressures change and increase prior to a filter purge, etc.). Some variation (e.g., at certain points, under certain conditions, over time) is known and expected. However, divergence in the expected values or typical variation, at patterns and/or with timing different than previously known/referenced (e.g., as reflected in a reference or "golden" build) can turn an expected pattern into an unwelcome pattern that can affect build quality. As such, variation can be identified, evaluated, and addressed as described herein.

In certain examples, to extract features related to additive machine settings (e.g., event, filtering, inerting, lasing, recoating, etc.), a recoded value is obtained from meta data or a weighted average is generated from time series data. For sparsely recorded sensor parameters such as dose factor trend over a build, a time weighted average can be computed based on a duration of each value, for example. For other settings, such as attribute, numeric, etc., one value can be recorded per build.

In certain examples, to extract features related to build times (e.g., event, lasing, recoating, etc.), computations are performed by the feature extractor 710 to understand availability and performance of the build. For example, for densely recorded build parameters such as exposure time, recoat time, etc., a mean can be determined for one or more layers. Other build time features can also be determined. For example, post-recoat lag can be calculated based on lag in a build after powder coating. Pre-recoat lag can be calculated based on lag in the build before powder coating. Exposure lag can be determined based on a computation delay evidenced by a difference between exposure stop and start. An interrupt duration can be calculated as a difference between build start and stop times. An error feature can be calculated as a total number of errors in a build, for example. A warning feature can be calculated as a total number of warnings in a build, for example. A laser balance percentage can be calculated as follows:

$$\left(1 - \frac{abs\,(LS1_{time} - LS2_{time})}{\max(LS1_{time},\,LS2_{time})}\right) * 100 \qquad \text{(Eq. 1)},$$

where $LS1_{time}$ is the exposure time of laser system 1 and $LS2_{time}$ is the exposure time of laser system 2.

A variability analyzer 720 processes the aggregated layer and/or build features to identify consistency, variability, etc., across the features. For example, the variability analyzer 720 can process sensor features, setting features, build time features, etc., to identify consistency and/or variability leading to identification of a satisfactory build/operation, an anomaly indicative of an error, other issue, or desire for maintenance, etc., depending on which features are consistent and which features show more than an acceptable degree of variation (e.g., more than a certain set threshold or range for the respective feature, etc.). The variability analyzer 720 can identify an outlier build from a group of builds and identify one or more top contributing features that make the outlier build an outlier compared to the rest of the group. The variability analyzer 720 can determine additive manufacturing machine 100 health over time including layer-wise and/or build trends based on the top contributing or "key" features. The variability analyzer 720 can compare the build to a reference or "golden" build to identify differences in the feature(s) and associated changes to be made to bring the current and/or future build of the same and/or similar additive manufacturing machine back within bounds/into compliance, for example. Such parameter/setting adjustment, notification, etc., is provided to the additive manufacturing machine 100, additive machine controller 120, etc., by an output generator 730 as an actionable output (e.g., instruction, setting, parameter change, etc.), for example.

For example, the variability analyzer 720, which can be implemented as part of the analytics daemon 624, for example, can determine a measure of variability in sensor feature(s), settings feature(s), build time feature(s), etc. For example, sensor readings such as residual oxygen (O2), laser rail temperature, etc., can be evaluated with respect to a process capability (Cpk) feature. Sensor values/features such as process chamber temperature, dew point, etc., can be evaluated with respect to a feature such as a Z-score with a limit, for example. A Z-score measures how many standard deviations above or below the mean a data point is, and a limit constrains that analysis. Sensor values (also referred to as sensor features) such as actual heating temperature, scan head temperature, etc., can be evaluated with respect to a feature such as a Z-score having a sigma limit and a direction applied, for example. Settings features such as recoat speed, dose factor, ventilator control, inert gas, material parameter, etc., can be evaluated based on a count of exceedance, for example. Build time features such as exposure time, recoat time, lag time, interrupt time, error count, etc., can be evaluated with respect to both Cpk and a count of exceedance, for example.

In certain examples, a Z-score can be computed for a build based on a reference group as follows:

$$Z - score\ of\ a\ build = \frac{(build\ mean - median\ of\ build\ means)}{average\ standard\ deviation\ of\ the\ build\ group} \qquad \text{(Eq. 2)},$$

where a prerequisite for a build duration weight mean of variation computation is to remove outliers outside defined limits (e.g., Q75/Q25+/-1.5*IQR). In other examples, the Z-score can be computed for a build based on a reference build as follows:

$$Z - score\ of\ a\ build = \frac{(build\ mean - reference\ build\ mean)}{average\ standard\ deviation\ of\ the\ build\ group} \qquad \text{(Eq. 3)}$$

The Z-score(s) can be evaluated by the variability analyzer 720 to determine whether the Z-score is sensitive to an outlier, works for any number of outliers, is independent of feature magnitude, etc.

In certain examples, process capability, Cpk, and associated upper (CpU) and lower (CpL) limits can be computed as follows:

$$CpU = \frac{(USL - \bar{\bar{X}})}{3\hat{\sigma}} \qquad \text{(Eq. 4)},$$

$$CpL = \frac{(\bar{\bar{X}} - LSL)}{3\hat{\sigma}} \text{ (Eq. 5)},$$

and

$$Cpk = Min(CpU, CpL) \qquad \text{(Eq. 6)},$$

where a Cpk > 1.33 is desirable, for example. As used above, CpU indicates a process capability based on an upper specification limit; CpL is a process capability based on a lower specification limit; USL is an upper specification limit; LSL is a lower specification limit; X is a mean of a current layer; and $\hat{\sigma}$ = *Standard Deviation*.

The variability analyzer 720 then processes the features to determine a percentage capability/stability (viewed differently as a percentage of variability or a measure of variability). The variability analyzer 720 can analyze data using processed features to determine a percentage of builds that can be categorized or classified (e.g., as optimal, not-optimal, warning, etc.) based on Z-score, Cpk, etc. If high variability between build categorization is identified, then a health of related additive manufacturing machine(s) can be further examined. If medium variability is identified, then build and/or layer trends can be further examined to determine whether an issue exists to be correct and what root cause(s) drive solution(s), for example.

In certain examples, varying group size can be managed. For example, builds of a short duration with lower variation can potentially nullify higher variation in builds of longer duration. As such, group size can be processed according to a standard deviation, with or without weights by duration. For example, a group standard deviation without weights can be calculated as:

$$Group\ Std.Dev. = \sqrt{\frac{\sum(S1^2 + S2^2 + \cdots)}{n}} \quad \text{(Eq. 7)}.$$

For example, a group standard deviation weighted by build duration can be calculated as:

$$Group\ Std.Dev. = \sqrt{\frac{\sum(D1*S1^2 + D2*S2^2 + \cdots)}{(D1 + D2 + \cdots)}} \quad \text{(Eq. 8)}.$$

As such, the variability analyzer 720 compares one or more builds to a reference or "golden" build, a group of other builds, etc., to identify differences in the feature(s) and associated changes to be made to bring the current and/or future build of the same and/or similar additive manufacturing machine back within bounds/into compliance, for example. Such parameter/setting adjustment, notification, etc., is provided to the additive manufacturing machine 100, additive machine controller 120, etc., by an output generator 730 as an actionable output (e.g., instruction, setting, parameter change, etc.), for example. The output generator 730 can generate one or more graphical user interfaces 630 to visualize the results and provide an interface 628, 630 to make adjustments at the additive machine controller 120, the additive manufacturing machine 100, etc. The output generator 730 can also include a machine interface 628 to the additive machine controller 120 and/or the additive manufacturing machine to make adjustments to settings, parameters, trigger maintenance, activate/enable, shutdown/disable, etc., to address an identified and/or predicted issue and associated root cause and avenue of correction, for example.

As an example, in operation, during recoat and new powder layer, part protrusion above the powder bed can be analyzed by the build-to-build variability analyzer 620. The part protrusion can interfere with the recoater and force build stoppage due to contact and torque applied to the recoater by the part. Analysis by the analyzer 620 identifies an improper gas flow setting, which can then be adjusted to normalize part position with respect to the powder bed (and recoater), for example.

While example implementations of the additive machine 100, the additive machine controller 120, the analytics processor 510, the meltpool data acquisition processor 520, the data storage 610, the build-to-build variability analyzer 620, etc., are illustrated in FIGS. 1-7, one or more of the elements, processes and/or devices may be combined, divided, re-arranged, omitted, eliminated and/or implemented in any other way. Further, one or more of the elements of FIGS. 1-7 may be implemented by hardware, software, firmware and/or any combination of hardware, software and/or firmware. Thus, for example, any of the example elements of FIGS. 1-7 can be implemented by one or more analog or digital circuit(s), logic circuits, programmable processor(s), programmable controller(s), graphics processing unit(s) (GPU(s)), video processing unit(s) (VPU(s)), accelerator card(s), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example elements of FIGS. 1-7 is/are hereby expressly defined to include a non-transitory computer readable storage device or storage disk such as a memory, a digital versatile disk (DVD), a compact disk (CD), a Blu-ray disk, etc. including the software and/or firmware. Further still, the elements of FIGS. 1-7 may include one or more elements, processes and/or devices in addition to, or instead of, those illustrated in FIGS. 1-7, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

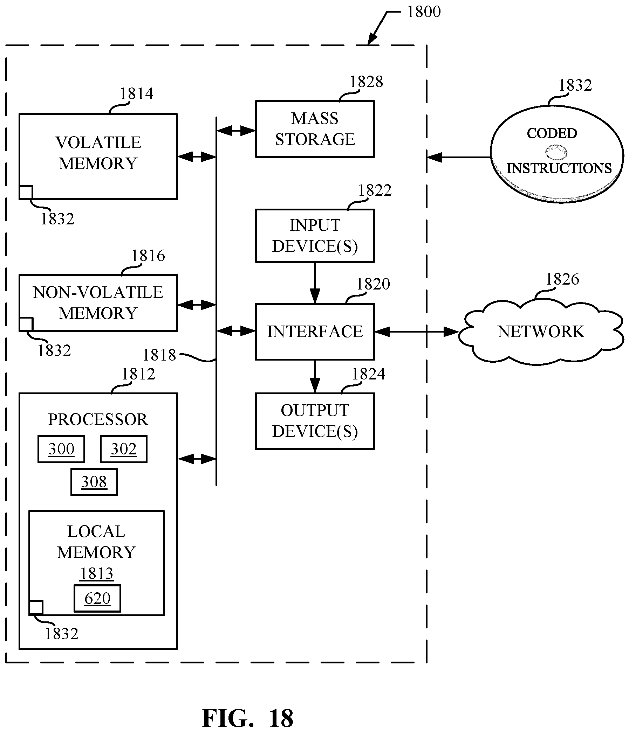

A flowchart representative of example hardware logic, machine readable instructions, hardware implemented state machines, and/or any combination thereof for implementing the example build-to-build variability analyzer 620 are shown in FIGS. 8-10. The machine readable instructions may be one or more executable programs or portion(s) of an executable program for execution by a computer processor and/or processor circuitry, such as the example build-to-build variability analyzer/deployment server 620 and/or the example processor platform 1800 discussed below in connection with FIG. 18. The program may be embodied in software stored on a non-transitory computer readable storage medium such as a CD-ROM, a floppy disk, a hard drive, a DVD, a Blu-ray disk, or a memory associated with the processor 1812, but the entire program and/or parts thereof could alternatively be executed by a device other than the processor 1812 and/or embodied in firmware or dedicated hardware. Further, although the example program is described with reference to the flowcharts illustrated in FIGS. 8-10, many other methods of implementing the example build-to-build variability analyzer 620 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example process(es) of FIGS. 8-10 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 8 is a flow diagram of an example method 800 for monitoring, determining, and adjusting health of a machine, process, and/or build, such as using the example build-to-build variability analyzer 620. At block 810, data is ingested. For example, control events, build metadata, before and after recoat images, meltpool time-series data, log files, other sensor values, etc., are provided to the build-to-build variability analyzer 620 directly and/or through the data storage 610.

At block 820, the build-to-build variability analyzer 620 constructs meta data from the log file and other build data.

For example, raw sensor values, images, machine settings, build parameters, etc., are processed to form meta data (e.g., through correlation/comparison, rules, etc.) that can aid the build-to-build variability analyzer 620 in evaluating the associated build and/or additive manufacturing machine 100.

At block 830, the build-to-build variability analyzer 620 parses the data into time series and/or otherwise prepares discrete data values. For example, a series of temperature measurements, gas concentration values, etc., collected over time can be organized into a time series for analysis. Other data that is not time-based can also be processed to standardize the data format, discard outlier(s), label outlier(s), etc.

At block 840, the build-to-build variability analyzer 620 groups builds according to one or more commonalities. For example, builds can be grouped based on additive manufacturing machine, type, date/time, part, etc.

At block 850, the build-to-build variability analyzer 620 extracts features from the processed data (and meta data). For example, the feature extractor 710 can extract one or more features from settings, sensor statistics, build events, physics/domain-based features (e.g., related to structures and/or operation of the additive manufacturing machine 100, etc.), etc. Features can be related to events, filtering, inerting, lasing, recoating, etc. Features can be based on numeric values, attributes, etc. Features can be based on maximum/minimum values, mean, time-weighted average, specific recorded values, standard deviation, etc.

At block 860, the build-to-build variability analyzer 620 measures variability in the extracted features. For example, the variability analyzer 720 analyzes variability in sensors, settings, build times, etc.

At block 870, the build-to-build variability analyzer 620 analyzes build performance on a particular additive manufacturing machine 100, across machines, etc. The variability analysis can identify one or more problems, errors, predictive issues, other issues, etc., and associated cause(s). At block 880, the build-to-build variability analyzer 620 provides an adjustment to address the identified issue(s) and associated cause(s). For example, a setting of the additive manufacturing machine 100 can be adjusted, a parameter of a build can be changed, predictive maintenance can be ordered for the machine 100, etc. In certain examples, a user interface 630 can be generated to visualize result(s), issue(s), solution(s), etc., for selection, adjustment, overrule, etc., by a user.

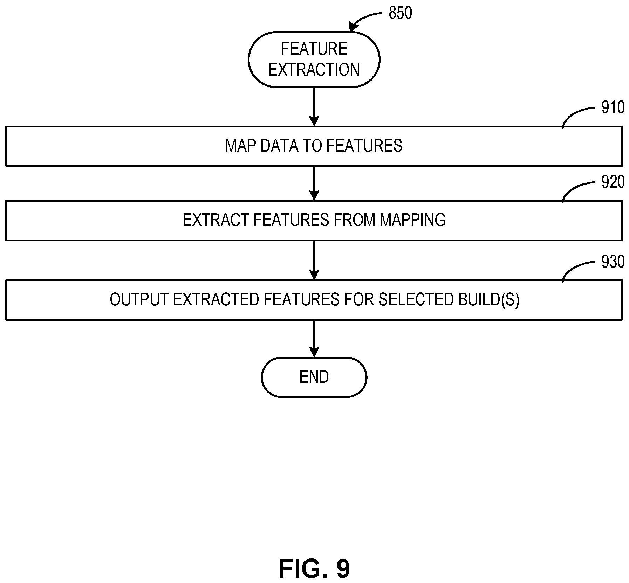

FIG. 9 is a flow diagram showing additional example detail for feature extraction by the feature extractor 710 of the build-to-build variability analyzer 620 (e.g., block 850 of the example method 800 of FIG. 8). At block 910, parsed data (e.g., log file 612 and/or other sensor and/or image data, etc.) is mapped to one or more features according to a configuration. For example, a configuration file enables mapping and categorization of extracted features for various modules of build variability analysis (e.g., settings, sensors, process times, etc.). The configuration also drives downstream statistical aggregations and physics-based derivations for variability analysis (e.g., mapping enables maximum value of the process chamber temperature bottom, standard deviation and mean of the residual oxygen values, etc.).

At block 920, a plurality of features is extracted from the feature mapping. For example, features related to settings, sensor statistics, build events, physics/domain-based features, etc., can be extracted from the mapping. At block 930, the extracted features are output for selected build(s), grouping, etc.

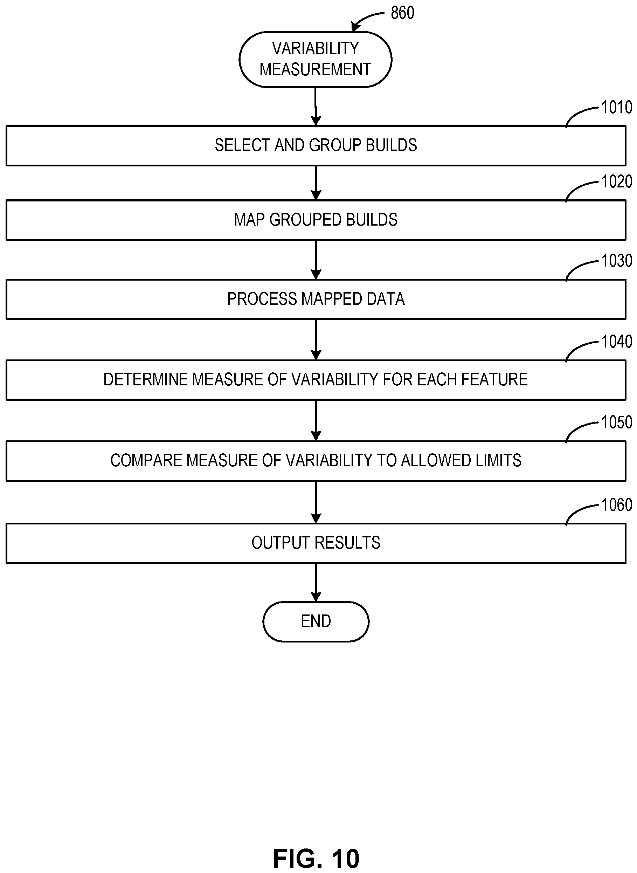

FIG. 10 is a flow diagram showing additional example detail for measurement of variability between monitored builds by the variability analyzer 720 of the build-to-build variability analyzer 620 (e.g., block 860 of the example method 800 of FIG. 8). At block 1010, builds are selected and grouped (e.g., based on same additive manufacturing machine 100, same build/part type, same time, etc.). At block 1020, grouped builds are mapped with respect to each other for analysis. For example, data for each build in a group is arranged and correlated for comparative analysis to determine a degree or percentage of variability for a given value between builds in the group.

At block 1030, the mapped data is processed. For example, a percentage change in a particular value that is allowed according to a build/machine configuration can be calculated, a percentage/degree of variation in a value that is allowed according to the build/machine configuration can be determined, etc. Other statistical limits can also be determined, for example.

At block 1040, a measure of variability is determined for each feature/feature set. For example, setting features, build time features, sensor features, etc., can be analyzed across the group of builds to identify a variability in the corresponding value.

At block 1050, the measure of variability is compared to the allowed limits for each feature/feature type. For example, variation in chiller temperature and/or other sensor value among the grouped builds is compared to an allowable percentage change, percentage variation, other statistical limit (e.g., a non-dimensional average distance of a sensor value of a build from the rest of neighboring builds chosen as part of a group, etc.) to determine whether or not the variation stays within acceptable limits.

At block 1060, results are output by the variability analyzer 720. For example, the measure(s) of variability for one or more values can be output for processing by the output generator 730 into a command for the additive machine controller 120, the additive manufacturing machine 100, the user interface 630, etc., an interactive visualization for the interface 630 such as a heat map (e.g., a visual in which values for one or more variables are depicted in degrees of color corresponding to a value of a corresponding variable in the corresponding cell range), histogram (e.g., a chart that plots a distribution of a numeric variable's values as a series of bars, where each bar indicates a frequency of data points with a corresponding value), mean versus fluctuation view (e.g., a visual depiction of an average of a set of values (mean) versus a variation in those values over time (fluctuation)), layer view (e.g., a data series displayed in a chart), layer trend view (e.g., an overlay of multiple data series (layers) on a single chart to compare trends across different data sets simultaneously, which may have an ability to selectively highlight and/or hide layers for more focused analysis, etc.), etc.

For example, one or more visualizations, interactive dashboards, etc., can be provided via the HMI backend 628 and the HMI 630. One or more adjustments, changes in setting/parameter/configuration, etc., can be provided to the additive machine controller 120, the additive machine 100, etc.

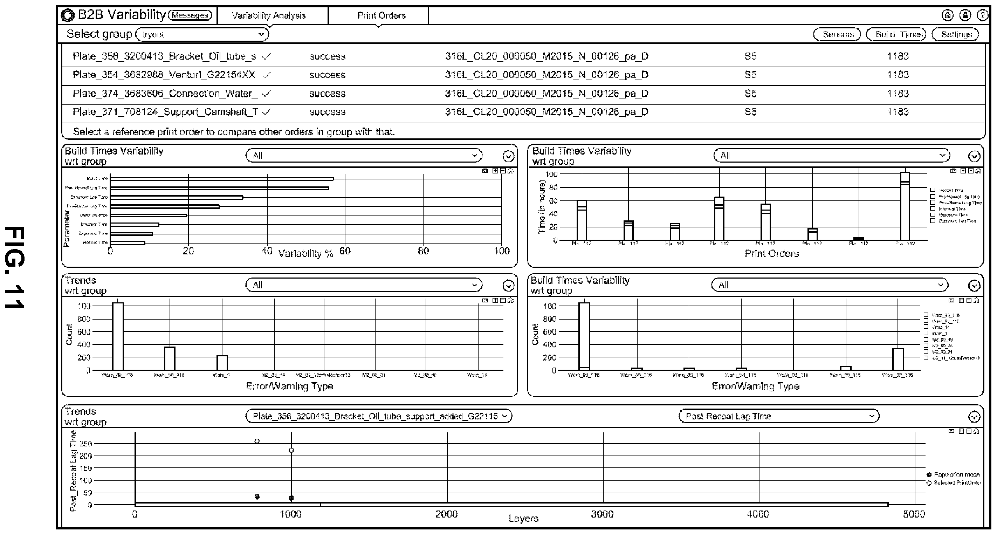

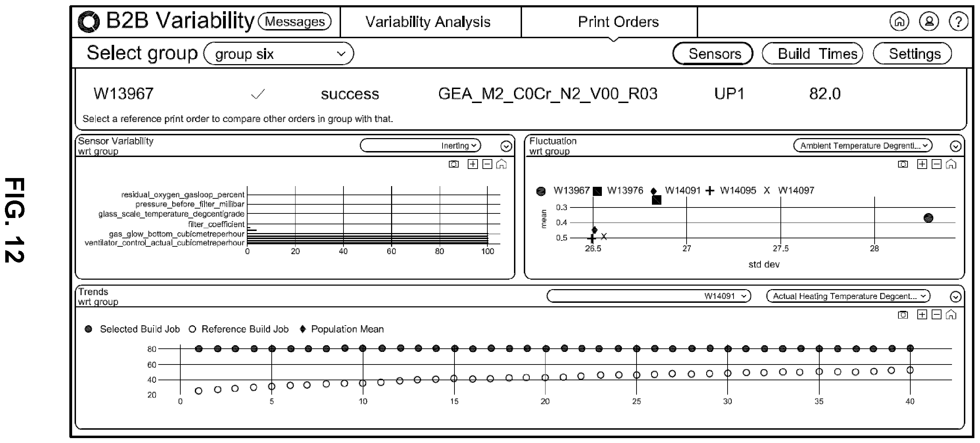

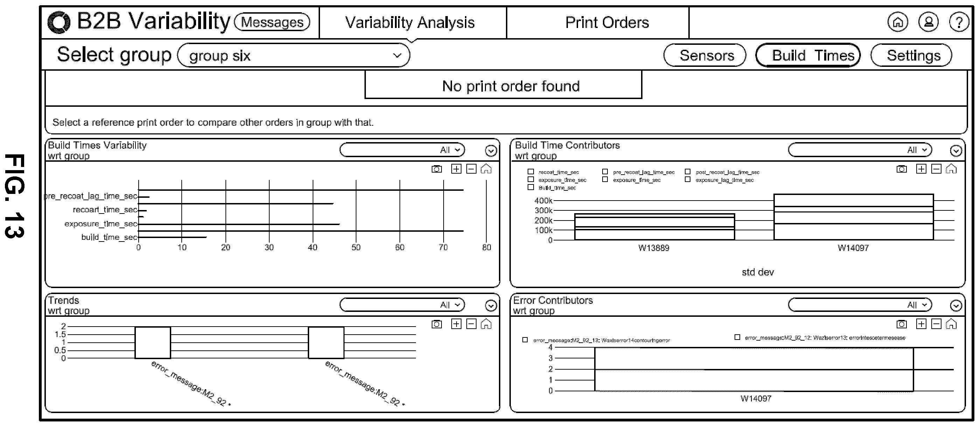

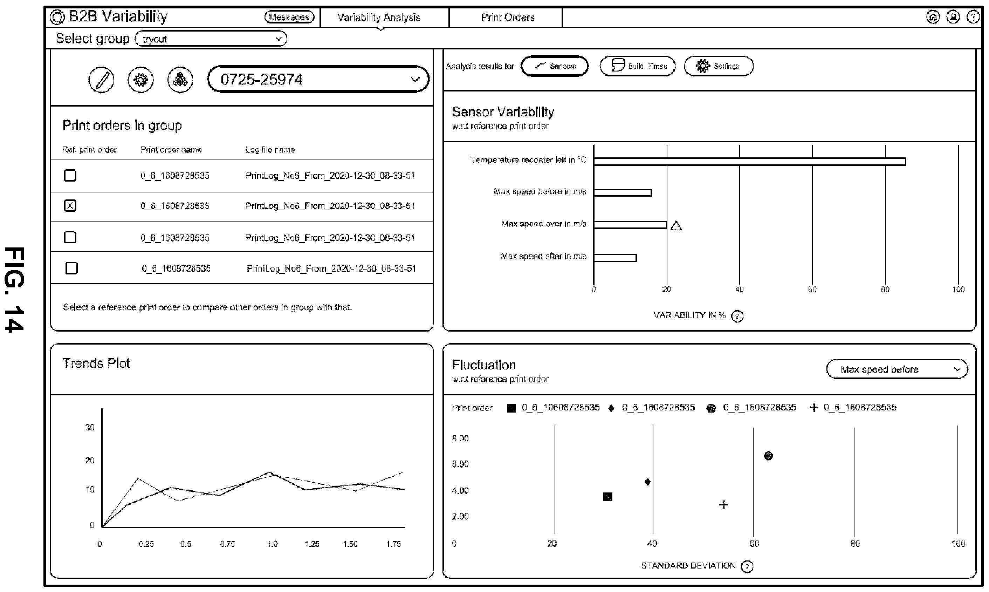

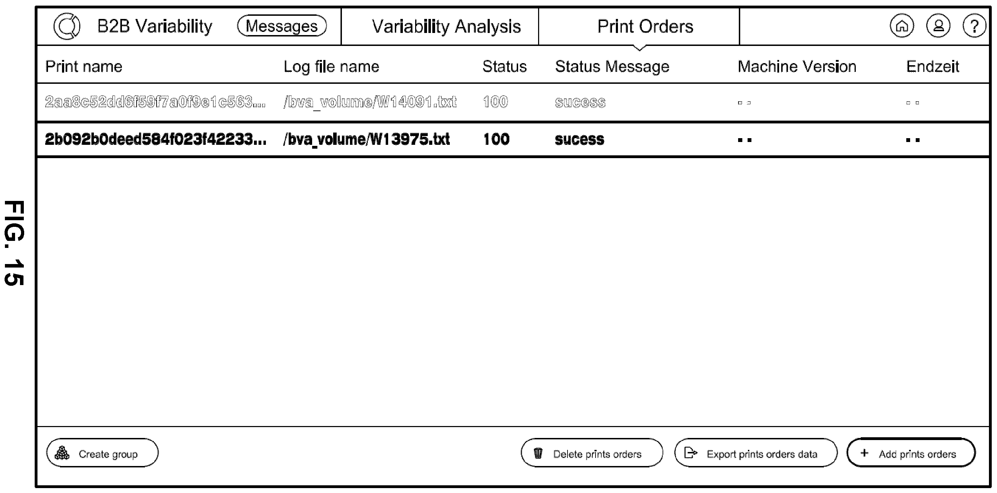

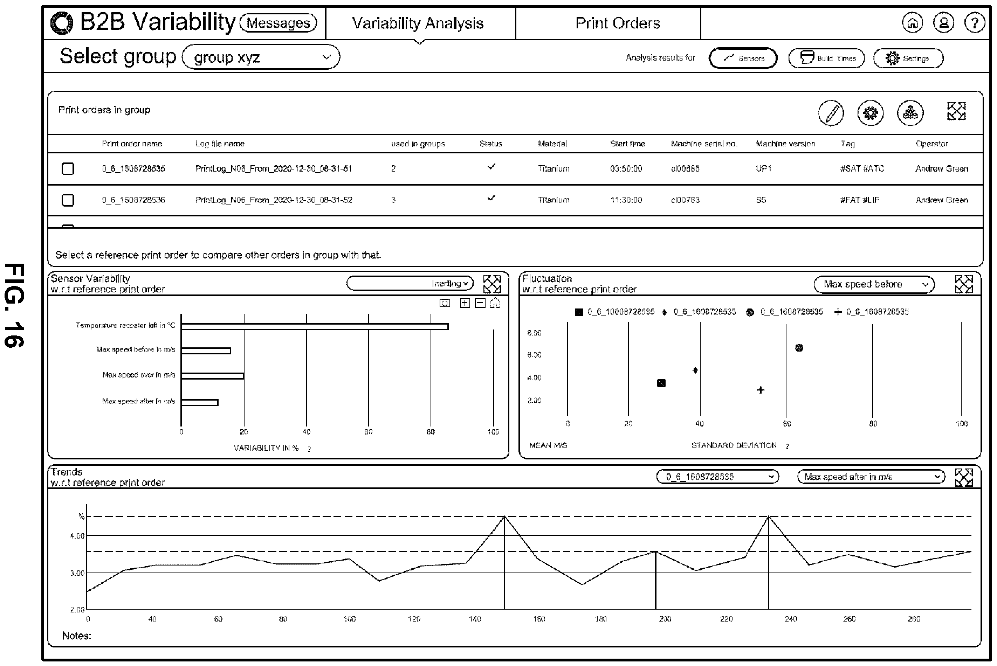

FIGS. 11-17 illustrate example interactive interfaces and associated controls that can form part of the user interface 630. For example, FIGS. 11-16 illustrate example interfaces to create a group, select one or more groups, view group(s), view trend(s) and/or variability within/among group(s), etc. Results are generated and output via the interfaces, which can be used to view and interact with the results, interpolate the results, take action to adjust build and/or machine configuration, etc. As shown in the examples of FIGS. 11-16, one or more combinations of a heat map view, histogram view, mean vs. fluctuation view, layer view, layer trend view, etc., can be provided to provide analysis, insight, and action across builds. Variability, fluctuation, trends, etc., can be generated and displayed for action to adjust one or more parameters of one or more builds/additive manufacturing machines.

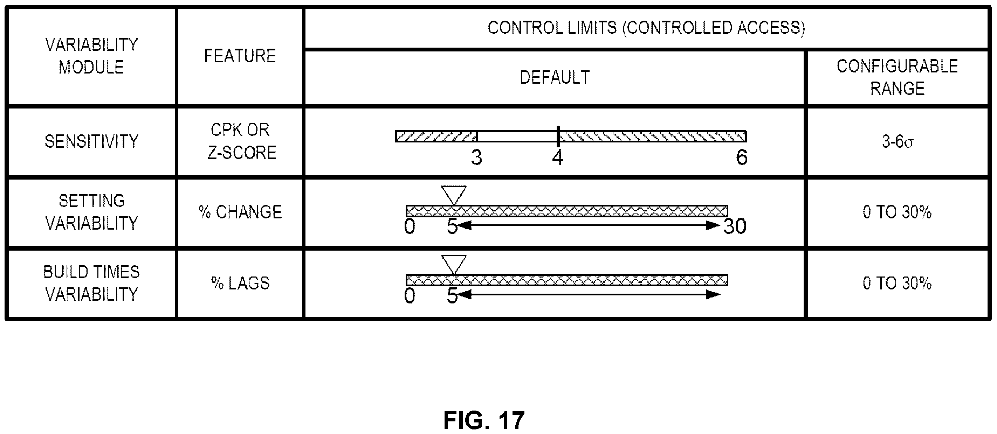

As shown in the example interface of FIG. 17, control limits can be configured for various aspects, such as sensitivity, setting variability, build time variability, etc., and associated feature, such as Cpk or Z-score, percent change, percent lag, etc. A default range can be adjusted with associated sensitivity sliders, resulting in a configurable range for the feature variability, for example.

As such, issues such as residual oxygen spikes and associated gas flow parameters, filter health and associated pressure/gas flow, build time variation and associated recoat, leak detection, surface finish issues, inerting, laser rail temperature, process chamber temperature, dew point temperature, chiller status/performance, meltpool oxygen signatures, residual oxygen, filter clogging, etc., can be identified, visualized, and adjusted

FIG. 18 is a block diagram of an example processor platform 1800 structured to execute the instructions of FIGS. 8-10 to implement the example deployment server 620 (build-to-build variability analyzer), etc. The processor platform 1800 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, or any other type of computing device.

The processor platform 1800 of the illustrated example includes a processor 1812. The processor 1812 of the illustrated example is hardware. For example, the processor 1812 can be implemented by one or more integrated circuits, logic circuits, microprocessors, GPUs, DSPs, or controllers from any desired family or manufacturer. The hardware processor may be a semiconductor based (e.g., silicon based) device.

The processor 1812 of the illustrated example includes a local memory 1813 (e.g., a cache and/or other memory circuitry). The processor 1812 of the illustrated example is in communication with a main memory/memory circuitry including a volatile memory 1814 and a non-volatile memory 1816 via a bus 1818. The volatile memory 1814 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 1816 may be implemented by flash memory and/or any other desired type of memory device/memory circuitry. Access to the main memory 1814, 1816 is controlled by a memory controller.

The processor platform 1800 of the illustrated example also includes an interface circuit 1820. The interface circuit 1820 may be implemented by any type of interface standard, such as an Ethernet interface, a universal serial bus (USB), a Bluetooth® interface, a near field communication (NFC) interface, and/or a PCI express interface.

In the illustrated example, one or more input devices 1822 are connected to the interface circuit 1820. The input device(s) 1822 permit(s) a user to enter data and/or commands into the processor 1812. The input device(s) can be implemented by, for example, an audio sensor, a microphone, a camera (still or video), a keyboard, a button, a mouse, a touchscreen, a track-pad, a trackball, and/or a voice recognition system.

One or more output devices 1824 are also connected to the interface circuit 1820 of the illustrated example. The output devices 1824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, and/or speaker. The interface circuit 1820 of the illustrated example, thus, typically includes a graphics driver card, a graphics driver chip and/or a graphics driver processor.

The interface circuit 1820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1826. The communication can be via, for example, an Ethernet connection, a digital subscriber line (DSL) connection, a telephone line connection, a coaxial cable system, a satellite system, a line-of-site wireless system, a cellular system, etc.

The processor platform 1800 of the illustrated example also includes one or more mass storage devices 1828 for storing software and/or data. Examples of such mass storage devices 1828 include floppy disk drives, hard drive disks, compact disk drives, Blu-ray disk drives, redundant array of independent disks (RAID) systems, and digital versatile disk (DVD) drives.

The machine executable instructions 1832 of FIGS. 8-10 may be stored in the mass storage device 1828, in the volatile memory 1814, in the non-volatile memory 1816, and/or on a removable non-transitory computer readable storage medium such as a CD or DVD.

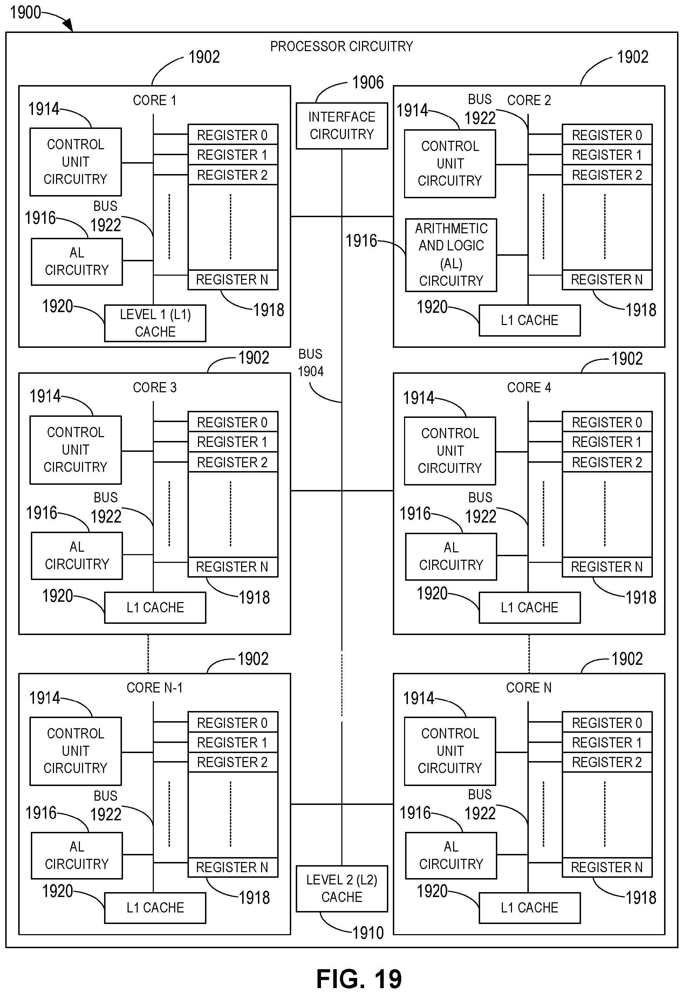

FIG. 19 is a block diagram of an example implementation of the processor circuitry 1812 of FIG. 18. In this example, the processor circuitry 1812 of FIG. 18 is implemented by a microprocessor 1900. For example, the microprocessor 1900 may implement multi-core hardware circuitry such as a CPU, a DSP, a GPU, an XPU, etc. Although it may include any number of example cores 1902 (e.g., 1 core), the microprocessor 1900 of this example is a multi-core semiconductor device including N cores. The cores 1902 of the microprocessor 1900 may operate independently or may cooperate to execute machine readable instructions. For example, machine code corresponding to a firmware program, an embedded software program, or a software program may be executed by one of the cores 1902 or may be executed by multiple ones of the cores 1902 at the same or different times. In some examples, the machine code corresponding to the firmware program, the embedded software program, or the software program is split into threads and executed in parallel by two or more of the cores 1902. The software program may correspond to a portion or all of the machine readable instructions and/or operations represented by the flowcharts of FIGS. 8-10.

The cores 1902 may communicate by an example bus 1904. In some examples, the bus 1904 may implement a communication bus to effectuate communication associated with one(s) of the cores 1902. For example, the bus 1904 may implement at least one of an Inter-Integrated Circuit (I2C) bus, a Serial Peripheral Interface (SPI) bus, a PCI bus, or a PCIe bus. Additionally or alternatively, the bus 1904 may implement any other type of computing or electrical bus. The cores 1902 may obtain data, instructions, and/or signals from one or more external devices by example interface circuitry 1906. The cores 1902 may output data, instructions, and/or signals to the one or more external devices by the interface circuitry 1906. Although the cores 1902 of this example include example local memory 1920 (e.g., Level 1 (L1) cache that may be split into an L1 data cache and an L1 instruction cache), the microprocessor 1900 also includes example shared memory 1910 that may be shared by the cores (e.g., Level 2 (L2_ cache)) for highspeed access to data and/or instructions. Data and/or instructions may be transferred (e.g., shared) by writing to and/or reading from the shared memory 1910. The local memory 1920 of each of the cores 1902 and the shared memory 1910 may be part of a hierarchy of storage devices including multiple levels of cache memory and the main memory (e.g., the main memory 1814, 1816 of FIG. 18). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1902 may be referred to as a CPU, DSP, GPU, etc., or any other type of hardware circuitry. Each core 1902 includes control unit circuitry 1914, arithmetic and logic (AL) circuitry (sometimes referred to as an ALU) 1916, a plurality of registers 1918, the L1 cache 1920, and an example bus 1922. Other structures may be present. For example, each core 1902 may include vector unit circuitry, single instruction multiple data (SIMD) unit circuitry, load/store unit (LSU) circuitry, branch/jump unit circuitry, floating-point unit (FPU) circuitry, etc. The control unit circuitry 1914 includes semiconductor-based circuits structured to control (e.g., coordinate) data movement within the corresponding core 1902. The AL circuitry 1916 includes semiconductor-based circuits structured to perform one or more mathematic and/or logic operations on the data within the corresponding core 1902. The AL circuitry 1916 of some examples performs integer based operations. In other examples, the AL circuitry 1916 also performs floating point operations. In yet other examples, the AL circuitry 1916 may include first AL circuitry that performs integer based operations and second AL circuitry that performs floating point operations. In some examples, the AL circuitry 1916 may be referred to as an Arithmetic Logic Unit (ALU). The registers 1918 are semiconductor-based structures to store data and/or instructions such as results of one or more of the operations performed by the AL circuitry 1916 of the corresponding core 1902. For example, the registers 1918 may include vector register(s), SIMD register(s), general purpose register(s), flag register(s), segment register(s), machine specific register(s), instruction pointer register(s), control register(s), debug register(s), memory management register(s), machine check register(s), etc. The registers 1918 may be arranged in a bank as shown in FIG. 19. Alternatively, the registers 1918 may be organized in any other arrangement, format, or structure including distributed throughout the core 1902 to shorten access time. The bus 1922 may implement at least one of an I2C bus, a SPI bus, a PCI bus, or a PCIe bus.

Each core 1902 and/or, more generally, the microprocessor 1900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1900 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

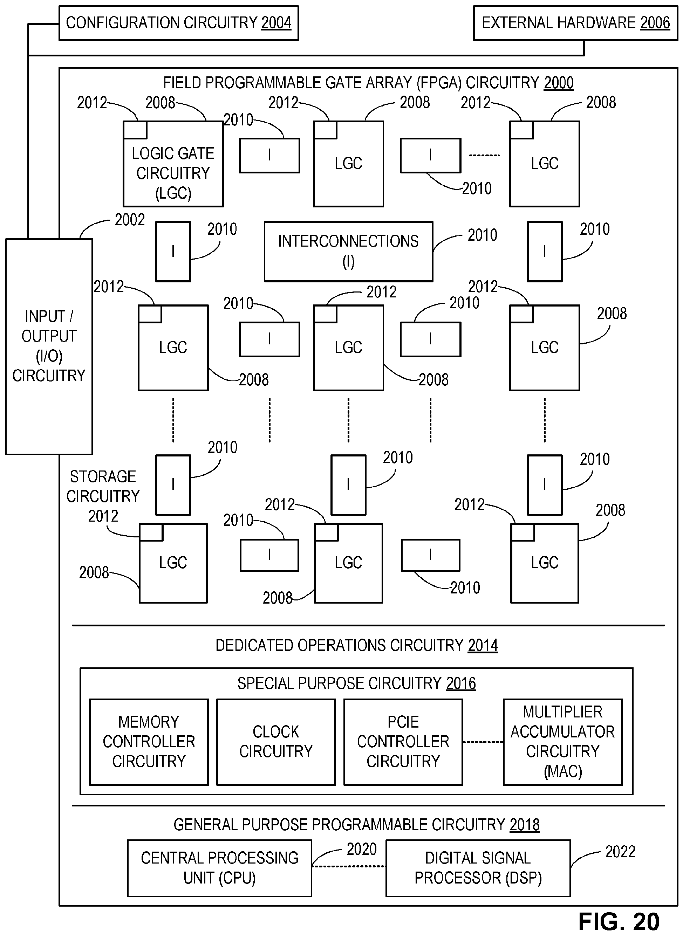

FIG. 20 is a block diagram of another example implementation of the processor circuitry 1812 of FIG. 18. In this example, the processor circuitry 1812 is implemented by FPGA circuitry 2000. The FPGA circuitry 2000 can be used, for example, to perform operations that could otherwise be performed by the example microprocessor 1900 of FIG. 19 executing corresponding machine readable instructions. However, once configured, the FPGA circuitry 2000 instantiates the machine readable instructions in hardware and, thus, can often execute the operations faster than they could be performed by a general purpose microprocessor executing the corresponding software.

More specifically, in contrast to the microprocessor 1900 of FIG. 19 described above (which is a general purpose device that may be programmed to execute some or all of the machine readable instructions represented by the flowcharts of FIGS. 8-10 but whose interconnections and logic circuitry are fixed once fabricated), the FPGA circuitry 2000 of the example of FIG. 20 includes interconnections and logic circuitry that may be configured and/or interconnected in different ways after fabrication to instantiate, for example, some or all of the machine readable instructions represented by the flowcharts of FIGS. 8-10. In particular, the FPGA 2000 may be thought of as an array of logic gates, interconnections, and switches. The switches can be programmed to change how the logic gates are interconnected by the interconnections, effectively forming one or more dedicated logic circuits (unless and until the FPGA circuitry 2000 is reprogrammed). The configured logic circuits enable the logic gates to cooperate in different ways to perform different operations on data received by input circuitry. Those operations may correspond to some or all of the software represented by the flowcharts of FIGS. 8-10. As such, the FPGA circuitry 2000 may be structured to effectively instantiate some or all of the machine readable instructions of the flowcharts of FIGS. 8-10 as dedicated logic circuits to perform the operations corresponding to those software instructions in a dedicated manner analogous to an ASIC. Therefore, the FPGA circuitry 2000 may perform the operations corresponding to the some or all of the machine readable instructions of FIGS. 8-10 faster than the general purpose microprocessor can execute the same.

In the example of FIG. 20, the FPGA circuitry 2000 is structured to be programmed (and/or reprogrammed one or more times) by an end user by a hardware description language (HDL) such as Verilog. The FPGA circuitry 2000 of FIG. 20, includes example input/output (I/O) circuitry 2002 to obtain and/or output data to/from example configuration circuitry 2004 and/or external hardware (e.g., external hardware circuitry) 2006. For example, the configuration circuitry 2004 may implement interface circuitry that may obtain machine readable instructions to configure the FPGA circuitry 2000, or portion(s) thereof. In some such examples, the configuration circuitry 2004 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 2006 may implement the microprocessor 1900 of FIG. 19. The FPGA circuitry 2000 also includes an array of example logic gate circuitry 2008, a plurality of example configurable interconnections 2010, and example storage circuitry 2012. The logic gate circuitry 2008 and interconnections 2010 are configurable to instantiate one or more operations that may correspond to at least some of the machine readable instructions of FIGS. 8-10 and/or other desired operations. The logic gate circuitry 2008 shown in FIG. 20 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2008 to enable configuration of the electrical structures and/or the logic gates to form circuits to perform desired operations. The logic gate circuitry 2008 may include other electrical structures such as look-up tables (LUTs), registers (e.g., flip-flops or latches), multiplexers, etc.

The interconnections 2010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2008 to program desired logic circuits.

The storage circuitry 2012 of the illustrated example is structured to store result(s) of the one or more of the operations performed by corresponding logic gates. The storage circuitry 2012 may be implemented by registers or the like. In the illustrated example, the storage circuitry 2012 is distributed amongst the logic gate circuitry 2008 to facilitate access and increase execution speed.

The example FPGA circuitry 2000 of FIG. 20 also includes example Dedicated Operations Circuitry 2014. In this example, the Dedicated Operations Circuitry 2014 includes special purpose circuitry 2016 that may be invoked to implement commonly used functions to avoid the need to program those functions in the field. Examples of such special purpose circuitry 2016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2000 may also include example general purpose programmable circuitry 2018 such as an example CPU 2020 and/or an example DSP 2022. Other general purpose programmable circuitry 2018 may additionally or alternatively be present such as a GPU, an XPU, etc., that can be programmed to perform other operations.

As such, the example FPGA circuitry 2000 can be used to (re)align and/or calibrate multi-laser alignment, stitching, other aspect of additive build execution, programming, etc., In certain examples, the FPGA circuitry 2000 can be used for scoring and data processing, together and/or in further combination with hyper-logging of data/events, etc.

Although FIGS. 19 and 20 illustrate two example implementations of the processor circuitry 1812 of FIG. 18, many other approaches are contemplated. For example, as mentioned above, modern FPGA circuitry may include an on-board CPU, such as one or more of the example CPU 2020 of FIG. 20. Therefore, the processor circuitry 1812 of FIG. 18 may additionally be implemented by combining the example microprocessor 1900 of FIG. 19 and the example FPGA circuitry 2000 of FIG. 20. In some such hybrid examples, a first portion of the machine readable instructions represented by the flowcharts of FIGS. 8-10 may be executed by one or more of the cores 1902 of FIG. 19 and a second portion of the machine readable instructions represented by the flowcharts of FIGS. 8-10 may be executed by the FPGA circuitry 2000 of FIG. 20.

In certain examples, the FPGA circuitry 2000 is leveraged for edge computing. In certain examples, the FPGA circuitry 2000 is implemented in conjunction with the deployment server 620 for improved timeliness and/or data fusion. A TPM can also be incorporated to provide and enable hardware and/or software root of trust security for stronger compute/memory/CPU.GPU/etc., at a second/sub-second time constraint. The FPGA provides millisecond analysis and response such that some data can flow to the FGPA 2000 and some data flows to the deployment server 620 to provide a quicker response from the FPGA 2000 and possibly a slower response from the deployment server 620. In certain examples, a connection between the FPGA 2000 and the deployment server 620 allows insights from the FPGA 2000 to flow to the deployment server 620 to improve the detection and correction of errors by the deployment server 620.

A block diagram illustrating an example software distribution platform 2105 to distribute software such as the example machine readable instructions 1832 of FIG. 18 to other hardware devices (e.g., hardware devices owned and/or operated by third parties from the owner and/or operator of the software distribution platform) is illustrated in FIG. 21. The example software distribution platform 2105 may be implemented by any computer server, data facility, cloud service, etc., capable of storing and transmitting software to other computing devices. The third parties may be customers of the entity owning and/or operating the software distribution platform 2105. For example, the entity that owns and/or operates the software distribution platform 2105 may be a developer, a seller, and/or a licensor of software such as the example machine readable instructions 1832 of FIG. 18. The third parties may be consumers, users, retailers, OEMs, etc., who purchase and/or license the software for use and/or re-sale and/or sub-licensing. In the illustrated example, the software distribution platform 2105 includes one or more servers and one or more storage devices. The storage devices store the machine readable instructions 1832, which may correspond to the example machine readable instructions of FIGS. 8-10, as described above. The one or more servers of the example software distribution platform 2105 are in communication with an example network 2110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1832 from the software distribution platform 2105. For example, the software, which may correspond to the example machine readable instructions of FIGS. 8-10, may be downloaded to the example programmable circuitry platform 1800, which is to execute the machine readable instructions 1832 to implement the example deployment server 620, etc. In some examples, one or more servers of the software distribution platform 2105 periodically offer, transmit, and/or force updates to the software (e.g., the example machine readable instructions 1832 of FIG. 18) to ensure improvements, patches, updates, etc., are distributed and applied to the software at the end user devices. Although referred to as software above, the distributed "software" could alternatively be firmware.

It should now be understood that that the devices, systems, and methods described herein monitor, determine, and adjust health of an additive manufacturing device and/or an associated process, build, etc. The systems and methods ingest data, manage state, process analytics, and generate an actionable output for layer-wise, build-wise, and machine-wise adjustment. Such monitoring, processing, and adjustment is not possible manually and relies on an analytics processor to achieve. In addition, the systems and methods according to the present disclosure enhances the accuracy of diagnosing builds and/or additive manufacturing device by determining and reacting to specific and overall health of the machine, process, and/or build.

Further aspects are provided by the subject matter of the following clauses:

An example apparatus includes: memory circuitry; instructions; and processor circuitry. The processor circuitry is to execute the instructions to implement at least: a feature extractor and a variability analyzer. The feature extractor is to: i) group data for a plurality of builds associated with one or more additive manufacturing machines; and ii) extract features from the grouped data. The variability analyzer is to: i) process the grouped data with respect to the features to determine a measure of variability for each feature; and ii) compare the measure of variability for each feature to a respective allowable limit associated with the respective feature; and an output generator to provide actionable output to adjust at least a first additive manufacturing machine.

The apparatus of any preceding clause, wherein the output generator is to provide the actionable output to an interactive user interface for display, selection, and adjustment.

The apparatus of any preceding clause, wherein the actionable output to the interactive user interface includes at least one of a heat map, a histogram view, a mean versus fluctuation view, or a layer trend view.

The apparatus of any preceding clause, wherein the actionable output is an adjustment in at least one of a setting for the first additive manufacturing machine or a parameter for a build of a part by the first additive manufacturing machine, and wherein the output generator is to provide the actionable output to adjust the first additive manufacturing machine.

The apparatus of any preceding clause, wherein the actionable output is a command to schedule maintenance of the first additive manufacturing machine, and wherein the output generator is to provide the actionable output to an additive machine controller associated with the first additive manufacturing machine.

The apparatus of any preceding clause, wherein features include at least one of setting features, sensor features, build event features, or physics/domain-based features.

The apparatus of any preceding clause, wherein the respective allowable limits include at least one of a percentage change allowed, a percentage variation allowed, or a statistical limit.

The apparatus of any preceding clause, wherein the measure of variability includes at least one of a build time measure of variability, a settings measure of variability, a sensor measure of variability.

An example non-transitory computer-readable medium includes instructions that, when executed by processor circuitry, cause the processor circuitry to at least: group data for a plurality of builds associated with one or more additive manufacturing machines; extract features from the grouped data; process the grouped data with respect to the features to determine a measure of variability for each feature; compare the measure of variability for each feature to a respective allowable limit associated with the respective feature; and provide actionable output to adjust at least a first additive manufacturing machine.

The non-transitory computer-readable medium of any preceding clause, wherein the processor circuitry is to provide the actionable output to an interactive user interface for display, selection, and adjustment.

The non-transitory computer-readable medium of any preceding clause, wherein the actionable output provided by the processor circuitry to the interactive user interface includes at least one of a heat map, a histogram view, a mean versus fluctuation view, or a layer trend view.

The non-transitory computer-readable medium of any preceding clause, wherein the actionable output provided by the processor circuitry is an adjustment in at least one of a setting for the first additive manufacturing machine or a parameter for a build of a part by the first additive manufacturing machine, and wherein the processor circuitry is to provide the actionable output to adjust the first additive manufacturing machine.

The non-transitory computer-readable medium of any preceding clause, wherein the actionable output provided by the processor circuity is a command to schedule maintenance of the first additive manufacturing machine, and wherein the processor circuitry is to provide the actionable output to an additive machine controller associated with the first additive manufacturing machine.

The non-transitory computer-readable medium of any preceding clause, wherein the processor circuitry is to compute the respective allowable limits based on at least one of a percentage change allowed, a percentage variation allowed, or a statistical limit.

An example method for analyzing and managing variability in an additive manufacturing machine includes: grouping, by executing an instruction using processor circuitry, data for a plurality of builds associated with one or more additive manufacturing machines; extracting, by executing an instruction using processor circuitry, features from the grouped data; processing, by executing an instruction using processor circuitry, the grouped data with respect to the features to determine a measure of variability for each feature; comparing, by executing an instruction using processor circuitry, the measure of variability for each feature to a respective allowable limit associated with the respective feature; and providing, by executing an instruction using processor circuitry, actionable output to adjust at least a first additive manufacturing machine.

The method of any preceding clause, wherein providing actionable output includes providing the actionable output to an interactive user interface for display, selection, and adjustment.

The method of any preceding clause, wherein the actionable output provided to the interactive user interface includes at least one of a heat map, a histogram view, a mean versus fluctuation view, or a layer trend view.

The method of any preceding clause, wherein providing actionable output includes providing an adjustment to the first additive manufacturing machine, the actionable output to adjust at least one of a setting for the first additive manufacturing machine or a parameter for a build of a part by the first additive manufacturing machine, and wherein the processor circuitry is to provide the actionable output to adjust the first additive manufacturing machine.

The method of any preceding clause, wherein providing actionable output includes providing, to an additive machine controller associated with the first additive manufacturing machine, a command to schedule maintenance of the first additive manufacturing machine.

The method of any preceding clause, further including computing the respective allowable limits based on at least one of a percentage change allowed, a percentage variation allowed, or a statistical limit.

While particular examples have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

**Claims**

1. An apparatus comprising:

   memory circuitry (304, 404);
   instructions; and
   processor circuitry (1800) to execute the instructions to implement at least:
   a feature extractor (710) to:

      i) group data for a plurality of builds associated with one or more additive manufacturing machines (100); and
      ii) extract features from the grouped data; and

      a variability analyzer (620, 720) to:

         i) process the grouped data with respect to the features to determine a measure of variability for each feature; and
         ii) compare the measure of variability for each feature to a respective allowable limit associated with the respective feature; and

      an output generator (730) to provide actionable output to adjust at least a first additive manufacturing machine.

2. The apparatus of claim 1, wherein the output generator (730) is to provide the actionable output to an interactive user interface (630) for display, selection, and adjustment.

3. The apparatus of claim 2, wherein the actionable output to the interactive user interface includes at least one of a heat map, a histogram view, a mean versus fluctuation view, or a layer trend view.

4. The apparatus of claim 1, wherein the actionable output is an adjustment in at least one of a setting for the first additive manufacturing machine or a parameter for a build of a part by the first additive manufacturing machine, and wherein the output generator is to provide the actionable output to adjust the first additive manufacturing machine.

5. The apparatus of claim 1, wherein the actionable output is a command to schedule maintenance of the first additive manufacturing machine, and wherein the output generator is to provide the actionable output to an additive machine controller associated with the first additive manufacturing machine.

6. The apparatus of claim 1, wherein features include at least one of setting features, sensor features, build event features, or physics/domain-based features.

7. The apparatus of claim 1, wherein the respective allowable limits include at least one of a percentage change allowed, a percentage variation allowed, or a statistical limit.

8. The apparatus of claim 1, wherein the measure of variability includes at least one of a build time measure of variability, a settings measure of variability, a sensor measure of variability.

9. A method for analyzing and managing variability in an additive manufacturing machine (100), the method comprising:

   grouping, by executing an instruction using processor circuitry (1800), data for a plurality of builds associated with one or more additive manufacturing machines (100);
   extracting, by executing an instruction using processor circuitry (1800), features from the grouped data;

processing, by executing an instruction using processor circuitry (1800), the grouped data with respect to the features to determine a measure of variability for each feature;

comparing, by executing an instruction using processor circuitry, the measure of variability for each feature to a respective allowable limit associated with the respective feature; and

providing, by executing an instruction using processor circuitry (1800), actionable output to adjust at least a first additive manufacturing machine (100).

10. The method of claim 9, wherein providing actionable output includes providing the actionable output to an interactive user interface (630) for display, selection, and adjustment.

11. The method of claim 10, wherein the actionable output provided to the interactive user interface includes at least one of a heat map, a histogram view, a mean versus fluctuation view, or a layer trend view.

12. The method of claim 9, wherein providing actionable output includes providing an adjustment to the first additive manufacturing machine, the actionable output to adjust at least one of a setting for the first additive manufacturing machine or a parameter for a build of a part by the first additive manufacturing machine, and wherein the processor circuitry is to provide the actionable output to adjust the first additive manufacturing machine.

13. The method of claim 9, wherein providing actionable output includes providing, to an additive machine controller associated with the first additive manufacturing machine, a command to schedule maintenance of the first additive manufacturing machine.

14. The method of claim 9, further including computing the respective allowable limits based on at least one of a percentage change allowed, a percentage variation allowed, or a statistical limit.

15. A non-transitory computer-readable medium comprising instructions that, when executed by processor circuitry, cause the processor circuitry to at least execute the method of any of claims 9-14.

FIG. 1

FIG. 2

FIG. 3

FIG. 4

EP 4 549 058 A1

500

| ADDITIVE MACHINE | ADDITIVE MACHINE |
|---|---|
| 100 | CONTROLLER |
| | 120 |

| MELTPOOL DATA | ANALYTICS |
|---|---|
| ACQUISITION | PROCESSOR |
| 520 | 510 |

INTERFACE
530

**FIG. 5**

FIG. 6

EP 4 549 058 A1

620

ADDITIVE
LOG/DATA INPUT

DATA STORAGE
610

FEATURE
EXTRACTOR
710

VARIABILITY
ANALYZER
720

OUTPUT
GENERATOR
730

ACTIONABLE
OUTPUT

**FIG. 7**

START
800

INGEST DATA
810

COSTRUCT META DATA
820

PARSE DATA
830

GROUP BUILDS
840

EXTRACT FEATURES
850

MEASURE VARIABILITY
860

ANALYZE BUILD PERFORMANCE
870

PROVIDE ADJUSTMENT
880

END

# FIG. 8

FIG. 9

860

VARIABILITY
MEASUREMENT

1010
SELECT AND GROUP BUILDS

1020
MAP GROUPED BUILDS

1030
PROCESS MAPPED DATA

1040
DETERMINE MEASURE OF VARIABILITY FOR EACH FEATURE

1050
COMPARE MEASURE OF VARIABILITY TO ALLOWED LIMITS

1060
OUTPUT RESULTS

END

# FIG. 10

FIG. 11

FIG. 12

**FIG. 13**

O B2B Variability (Messages) | Variability Analysis | Print Orders | (⌂) (👤) (?)

Select group (group six ⌄)     (Sensors) (Build Times) (Settings)

No print order found

Select a reference print order to compare other orders in group with that.

Build Times Variability
wrt group      ( All ⌄ ) (⌄)
📷 ⊞ ⊟ ⌂

pre_recoat_lag_time_sec
recoart_time_sec
exposure_time_sec
build_time_sec

0  10  20  30  40  50  60  70  80

Build Time Contributors
wrt group      ( All ⌄ ) (⌄)
📷 ⊞ ⊟ ⌂

☐ recoat_time_sec  ☐ pre_recoat_lag_time_sec  ☐ post_recoat_lag_time_sec
☐ exposure_time_sec  ☐ exposure_time_sec  ☐ exposure_lag_time_sec
☐ build_time_sec

400k
300k
200k
100k
0
     W13889          W14097

std dev

Trends
wrt group      ( All ⌄ ) (⌄)
📷 ⊞ ⊟ ⌂

2
1.5
1
0.5
0

error_message:M2_92_*      error_message:M2_92_*

Error Contributors
wrt group      ( All ⌄ ) (⌄)
📷 ⊞ ⊟ ⌂

☐ error_message:M2_92_13: W2a1serror14contouringerror      ☐ error_message:M2_92_12: W2z1serror13: errorintescelermessease

4
3
2
1
0
     W14097

44

**FIG. 14**

**FIG. 15**

| B2B Variability | Messages | Variability Analysis | Print Orders | ⌂ ⧒ ? |

| Print name | Log file name | Status | Status Message | Machine Version | Endzeit |
|---|---|---|---|---|---|
| 2aa8c52dd6f59f7a0f9e1c563... | /bva_volume/W14091.txt | 100 | sucess | □ ◻ | □ ◻ |
| **2b092b0deed584f023f42233...** | **/bva_volume/W13975.txt** | **100** | **sucess** | **▪ ▪** | **▪ ▪** |

Create group     🗑 Delete prints orders     ⮂ Export prints orders data     + Add prints orders

FIG. 16

EP 4 549 058 A1

○ B2B Variability (Messages) | Variability Analysis | Print Orders | | ⌂ ⓐ ⑦

Select group ( group xyz ▾ )    Analysis results for ( ⟋ Sensors ) ( ▯ Build Times ) ( ⚙ Settings )

### Print orders in group    ✎ ⚙ ♣ ⤢

| | Print order name | Log file name | used in groups | Status | Material | Start time | Machine serial no. | Machine version | Tag | Operator |
|---|---|---|---|---|---|---|---|---|---|---|
| ☐ | 0_6_1608728535 | PrintLog_N06_From_2020-12-30_08-31-51 | 2 | ✓ | Titanium | 03:50:00 | cl00685 | UP1 | #SAT #ATC | Andrew Green |
| ☐ | 0_6_1608728536 | PrintLog_N06_From_2020-12-30_08-31-52 | 3 | ✓ | Titanium | 11:30:00 | cl00783 | S5 | #FAT #LIF | Andrew Green |

Select a reference print order to compare other orders in group with that.

**Sensor Variability**
w.r.t reference print order    ( Inerting ▾ ) ⤢

◎ ⊞ ⊟ ⌂

Temperature recoater left in °C

Max speed before in m/s

Max speed over in m/s

Max speed after in m/s

0    20    40    60    80    100

VARIABILITY IN %   ?

**Fluctuation**
w.r.t reference print order    ( Max speed before ▾ ) ⤢

■ 0_6_10608728535   ◆ 0_6_1608728535   ● 0_6_1608728535   ＋ 0_6_1608728535

8.00

6.00

4.00

2.00

0    20    40    60    80    100

MEAN M/S    STANDARD DEVIATION   ?

**Trends**
w.r.t reference print order    ( 0_6_1608728535 ▾ ) ( Max speed after in m/s ▾ ) ⤢

%

4.00

3.00

2.00

0    40    60    80    100    120    140    160    180    200    220    240    260    280

Notes:

| VARIABILITY MODULE | FEATURE | CONTROL LIMITS (CONTROLLED ACCESS) | |
|---|---|---|---|
| | | DEFAULT | CONFIGURABLE RANGE |
| SENSITIVITY | CPK OR Z-SCORE | 3  4  6 | 3-6$\sigma$ |
| SETTING VARIABILITY | % CHANGE | 0  5 → 30 | 0 TO 30% |
| BUILD TIMES VARIABILITY | % LAGS | 0  5 → | 0 TO 30% |

**FIG. 17**

EP 4 549 058 A1

1800

1814

**VOLATILE MEMORY**

1832

1816

**NON-VOLATILE MEMORY**

1832

1818

1812

**PROCESSOR**

300 302

308

**LOCAL MEMORY**
1813
620

1832

1828

**MASS STORAGE**

1822

**INPUT DEVICE(S)**

1820

**INTERFACE**

1824

**OUTPUT DEVICE(S)**

1832

**CODED INSTRUCTIONS**

1826

**NETWORK**

**FIG. 18**

1900

**FIG. 19**

CONFIGURATION CIRCUITRY 2004

EXTERNAL HARDWARE 2006

FIELD PROGRAMMABLE GATE ARRAY (FPGA) CIRCUITRY 2000

2012    2008    2010    2012    2008    2012    2008

LOGIC GATE
CIRCUITRY
(LGC)

I    LGC    I    LGC

2002    2010    2010    2010

I    INTERCONNECTIONS
(I)    I

INPUT /
OUTPUT
(I/O)
CIRCUITRY

2012    2010    2012    2010    2012    2008

LGC    I    LGC    I    LGC

2008    2008

STORAGE
CIRCUITRY    2010    2010    2010

I    I    I

2012    2010    2012    2012    2008

LGC    I    LGC    I    LGC

2008    2008    2010

DEDICATED OPERATIONS CIRCUITRY 2014

SPECIAL PURPOSE CIRCUITRY 2016

| MEMORY CONTROLLER CIRCUITRY | CLOCK CIRCUITRY | PCIE CONTROLLER CIRCUITRY | MULTIPLIER ACCUMULATOR CIRCUITRY (MAC) |

GENERAL PURPOSE PROGRAMMABLE CIRCUITRY 2018

| CENTRAL PROCESSING UNIT (CPU) | 2020 | DIGITAL SIGNAL PROCESSOR (DSP) | 2022 |

**FIG. 20**

SOFTWARE
DISTRIBUTION
PLATFORM — 2105

INSTR
1832

NETWORK — 2110

PROCESSOR
PLATFORM(S) — 1800

1832

## FIG. 21

Europäisches
Patentamt

European
Patent Office

Office européen
des brevets

# EUROPEAN SEARCH REPORT

**Application Number**

EP 24 21 0456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/140860 A1 (HEWLETT PACKARD DEVELOPMENT CO [US]) 27 July 2023 (2023-07-27) * claim 1 * * claim 15 * * paragraph [0071] * * paragraph [0080] - paragraph [0081] * * figures 4A-B * | 1-15 | INV. B22F10/80 B22F10/85 B22F12/90 B29C64/386 B33Y50/00 B33Y50/02 B33Y10/00 B33Y30/00 |
| X | US 2018/154484 A1 (HALL LIAM DAVID [GB]) 7 June 2018 (2018-06-07) * paragraph [0154] - paragraph [0155] * * paragraph [0077] * * paragraph [0127]; figures 4A-B * * paragraph [0152] * * paragraph [0148] * * claims 115-116 * | 1-15 | G05B19/18 ADD. G06N3/02 |
| A | US 2019/004496 A1 (BLOM ROGIER SEBASTIAAN [US] ET AL) 3 January 2019 (2019-01-03) * figure 11 * * abstract * | 1-15 | |
| A | US 2019/091770 A1 (BALANICA VICTOR [DE] ET AL) 28 March 2019 (2019-03-28) * claim 10 * * figure 2 * * abstract * | 1-15 | TECHNICAL FIELDS SEARCHED (IPC) B22F B29C B33Y G05B G06N |
| A | US 2023/062971 A1 (NAVALGUND MEGHA [IN] ET AL) 2 March 2023 (2023-03-02) * abstract * * claims 1-20 * | 1-15 | |

The present search report has been drawn up for all claims

| Place of search | Date of completion of the search | Examiner |
|---|---|---|
| The Hague | 21 March 2025 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0456

21-03-2025

| Patent document cited in search report | Publication date | Patent family member(s) | Publication date |
|---|---|---|---|
| WO 2023140860 A1 | 27-07-2023 | NONE | |
| US 2018154484 A1 | 07-06-2018 | CA 2991681 A1 | 15-12-2016 |
| | | CN 107708895 A | 16-02-2018 |
| | | CN 113231651 A | 10-08-2021 |
| | | EP 3307522 A1 | 18-04-2018 |
| | | EP 3705273 A1 | 09-09-2020 |
| | | JP 2018523011 A | 16-08-2018 |
| | | US 2018154484 A1 | 07-06-2018 |
| | | US 2020368850 A1 | 26-11-2020 |
| | | WO 2016198885 A1 | 15-12-2016 |
| US 2019004496 A1 | 03-01-2019 | CN 109203478 A | 15-01-2019 |
| | | CN 119237770 A | 03-01-2025 |
| | | DE 102018115320 A1 | 03-01-2019 |
| | | US 2019004496 A1 | 03-01-2019 |
| US 2019091770 A1 | 28-03-2019 | NONE | |
| US 2023062971 A1 | 02-03-2023 | EP 4144463 A1 | 08-03-2023 |
| | | US 2023062971 A1 | 02-03-2023 |

**EP 4 549 058 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311075630